# FASCICULE DE BREVET EUROPEEN

(11) **EP 4 090 511 B1**
(45) Date de publication et mention de la délivrance du brevet: **18.09.2024**
(21) Numéro de dépôt: 20848701.7
(22) Date de dépôt: 16.12.2020
(51) Int. Cl.: B29C 48/35, B29C 48/88

(54) **MACHINE D'EXTRUSION UTILISANT UNE CHAÎNE DE ROULEAUX ARTICULÉE POUR ENGAGER ET GUIDER UN PROFILÉ EXTRUDÉ CONTRE UN ROULEAU REFROIDISSEUR**
EXTRUSIONSMASCHINE MIT EINER GLIEDERWALZENKETTE ZUM INEINANDERGREIFEN UND FÜHREN EINES EXTRUDIERTEN PROFILS GEGEN EINE KÜHLWALZE
EXTRUSION MACHINE USING AN ARTICULATED ROLLER CHAIN TO ENGAGE AND GUIDE AN EXTRUDED PROFILE MEMBER AGAINST A COOLING ROLLER

(30) Priorité: 23.12.2019 FR 1915400
(43) Date de publication de la demande: 23.11.2022
(73) Titulaire: COMPAGNIE GENERALE DES ETABLISSEMENTS MICHELIN, 63000 Clermont-Ferrand (FR)
(72) Inventeur: MIOCHE, Gilles, 63040 Clermont-Ferrand Cedex 9 (FR); LETOCART, Arnaud, 63040 Clermont-Ferrand Cedex 9 (FR)
(74) Mandataire: M.F.P. Michelin
(86) Numéro de dépôt international: PCT/FR2020/052479
(87) Numéro de publication internationale: WO 2021/130439

(56) Documents cités:
- WO-A2-98/06554

## Description

La présente invention concerne le domaine des machines d'extrusion destinées à fabriquer des profilés, tels que des bandes de matériau élastomère destinées à entrer dans la fabrication de bandages pneumatiques.

L'invention concerne plus particulièrement des dispositifs de guidage dits « dispositifs d'embarrage » qui permettent de guider le profilé en sortie de filière, et notamment qui permettent d'engager et de poser ledit profilé sur une surface de réception, de préférence la surface d'un rouleau refroidisseur, sur laquelle ledit profilé peut refroidir et se stabiliser de manière contrôlée, c'est-à-dire adopter sa forme et ses dimensions définitives, au contact de ladite surface de réception, sous l'effet du refroidissement du matériau élastomère et de la relaxation des contraintes internes qui étaient nées du processus d'extrusion. Par exemple, la demande de brevet WO98/06554 décrit une ligne d'extrusion horizontale sous vide comprend une cloison fixe, une filière à l'intérieur de la cloison, une section de chambre à vide télescopique et une section de chambre fixe. Un barrage dans la section fixe forme un bassin pour le refroidissement par immersion de l'extrudat. Une poutrelle s'étend du barrage à la cloison supportant l'équipement de façonnage et d'étalonnage et traverse la section télescopique. Des joints d'étanchéité pressurisables à chaque extrémité de la section télescopique peuvent être actionnés une fois que la section télescopique est fermée contre la cloison et que les sections télescopique et fixe sont verrouillées ensemble. La section télescopique permet d'obtenir une ligne plus compacte et facilite l'accès à l'équipement complexe situé en aval de la filière. L'extrudat provenant de la filière descend dans le bassin et traverse ensuite un orifice dans un capot faisant saillie de la chambre dans une partie inférieure du bassin exposée à l'atmosphère. La hotte comprend également un système d'entraînement pour pousser l'extrudat à travers l'orifice sous-marin. La hotte et son contenu sont accessibles par le bassin atmosphérique. Un tracteur de transport et l'entraînement du tracteur dans la hotte sont les seuls entraînements d'extrudat entre l'équipement d'étalonnage et l'atmosphère. Le niveau supérieur du bassin dans la chambre en aval du barrage est contrôlé par une vanne qui commande à son tour la sortie d'une pompe. La vanne détecte le niveau du bassin et fonctionne indépendamment des commandes de vide.

Sur les machines d'extrusion connues, il arrive parfois, notamment au début du processus d'extrusion, lorsque le front du profilé commence à émerger de la filière tandis que la machine d'extrusion n'a pas atteint un régime parfaitement établi et présente donc potentiellement quelques écarts dans sa régulation thermique ou quelques irrégularités dans l'écoulement du ou des matériaux extrudés, que ledit front du profilé présente certaines hétérogénéités dans sa forme et ses dimensions, telles que par exemple une surépaisseur de matière formant un bourrelet frontal, ou bien encore une certaine variabilité de ses propriétés mécaniques ou de son degré d'adhérence (dit aussi « collant », en anglais : « tack »).

Il arrive également que le front du profilé se recourbe ou se redresse, voire forme un pli ou une amorce de pli, en déviant ainsi de la direction longitudinale dans laquelle on souhaiterait diriger ledit profilé pour engager ledit profilé sur le rouleau refroidisseur.

Ces défauts peuvent parfois gêner l'engagement du profilé dans le circuit de guidage qui prend en charge ledit profilé en aval de la filière, voire provoquer un engorgement dudit circuit de guidage, ce qui nécessite un arrêt de la machine pour une opération de maintenance, et peut occasionner un gaspillage de temps, d'énergie et de matière première utilisée pour constituer le profilé.

Les objets assignés à l'invention visent par conséquent à remédier aux inconvénients susmentionnés et à proposer une machine d'extrusion et un nouveau dispositif de guidage associé qui garantisse un acheminement convenable et fiable du profilé dans toutes les circonstances, et notamment lors des périodes transitoires de démarrage de la machine d'extrusion.

Les objets assignés à l'invention sont atteints au moyen d'une machine d'extrusion comprenant une filière pour générer un profilé à partir d'un ou plusieurs matériaux extrudés, de sorte que ledit profilé s'étend en longueur selon une direction dite « direction longitudinale », ladite machine d'extrusion comprenant en outre un organe de réception, tel qu'un rouleau principal refroidisseur, qui possède une surface de réception destinée à recevoir le profilé qui sort de la filière et à permettre audit profilé d'avancer selon la direction longitudinale, ladite machine d'extrusion étant caractérisée en ce qu'elle comprend un dispositif de guidage qui comporte une chaîne articulée à rouleaux auxiliaires comprenant une pluralité de maillons qui sont pourvus de rouleaux auxiliaires montés rotatifs et qui sont connectés deux à deux par des articulations permettant un libre basculement desdits maillons les uns par rapport aux autres, et en ce que le dispositif de guidage est agencé pour pouvoir placer ladite chaîne en vis-à-vis de la surface de réception, en aval de la filière selon la direction longitudinale, dans une configuration dite « configuration d'engagement » selon laquelle au moins une partie des rouleaux auxiliaires portés par des maillons successifs de ladite chaîne délimitent, avec la surface de réception, un chemin de guidage qui s'étend selon la direction longitudinale de manière à ce que le profilé puisse s'engager et progresser dans ledit chemin de guidage, entre lesdits rouleaux auxiliaires et la surface de réception, et que lesdits rouleaux auxiliaires puissent plaquer ledit profilé contre la surface de réception.

Avantageusement, l'utilisation d'un guidage par chaîne de rouleaux auxiliaires permet de maintenir ou de rabattre le front du profilé contre la surface de réception, sur une longueur suffisante le long de la direction longitudinale pour assurer une bonne adhérence dudit profilé sur ladite surface de réception.

De façon particulièrement avantageuse, la flexibilité conférée par les articulations des maillons permet à la chaîne, et donc plus globalement au chemin de guidage, d'accommoder d'éventuelles variations d'épaisseur du front du profilé, notamment des bourrelets, ou d'éventuelles déviations du front du profilé en sortie de filière, et de ramener systématiquement et progressivement ledit profilé vers et contre la surface de réception, au fur et à mesure que le profilé progresse le long de la direction longitudinale, sans risquer un engorgement du chemin de guidage.

Grâce à la flexibilité de la chaîne, le chemin de guidage peut ainsi adapter sa configuration, et plus particulièrement peut adapter la hauteur de passage que la chaîne délimite par rapport à la surface de réception aux conditions qui sont nécessaires au passage du profilé à l'instant considéré, et ce de manière automatique et dynamique, en temps réel, et le cas échéant de manière passive, c'est-à-dire en simple réponse à la poussée qu'exerce le profilé lors de son mouvement d'avance.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
La figure 1 illustre, selon une vue en perspective, une machine d'extrusion selon l'invention, en configuration ouverte de maintenance, ladite machine possédant un organe de réception formé par un rouleau principal.
La figure 2 est une vue de face de la machine de la figure 1.
La figure 3 est une vue de face en coupe de la machine des figures 1 et 2.
La figure 4 illustre, selon une vue en perspective, la machine des figures 1 à 3 en configuration fermée de travail, avec, en médaillon, le détail agrandi d'un mécanisme de positionnement permettant de positionner le support de la chaîne par rapport au bâti de la machine d'extrusion.
La figure 5 est une vue de côté de la machine de la figure 4.
La figure 6 est une vue de face de la machine des figures 4 et 5.
La figure 7 est une vue de face en coupe de la machine des figures 4 à 6, avec la chaîne placée en configuration initiale de dégagement.
La figure 8 est une vue de face en coupe de la machine de la figure 7, mais dont la chaîne est cette fois placée en configuration d'engagement, de sorte à venir partiellement au contact du rouleau principal, et prête à recevoir le profilé extrudé.
La figure 9 est une vue schématique de face en coupe de la machine de la figure 8 au début du processus d'extrusion d'un profilé, dans une première phase où le front dudit profilé émerge de la filière et se présente à l'entrée du chemin de guidage, entre la surface de réception et les rouleaux auxiliaires de la chaîne.
La figure 10 est une vue de détail agrandie de la figure 9.
La figure 11 est une vue schématique de face en coupe de la machine des figures 8 et 9 dans une seconde phase où le front du profilé, entraîné par la rotation de la surface de réception à laquelle ledit profilé adhère, poursuit sa progression dans le chemin de guidage en écartant des maillons de la chaîne pour se frayer un passage entre le rouleau principal et lesdits maillons qui maintiennent ledit profilé plaqué contre ledit rouleau principal.
La figure 12 est une vue de détail agrandie de la figure 11.
La figure 13 est une vue schématique de face en coupe de la machine des figures 8 à 12 dans une troisième phase où le front du profilé a parcouru une distance, par rapport à la filière, qui est jugée suffisante pour que le profilé soit solidement ancré sur le rouleau principal, et où la chaîne est alors rappelée dans sa configuration de dégagement, en retrait du rouleau principal, pour permettre audit rouleau principal d'entraîner librement le profilé qui continue d'être extrudé d'un seul tenant depuis la filière.
Les figures 14, 15 et 16 illustrent, respectivement selon des vues de face, de côté, et en perspective, le détail d'un dispositif de guidage à chaîne de rouleaux auxiliaires utilisé au sein de la machine des figures 1 à 13.

La présente invention concerne une machine 1 d'extrusion pour générer un profilé 2 à partir d'un ou plusieurs matériaux extrudés.

Ledit ou lesdits matériaux sont de préférence des mélanges d'élastomères, par exemple des mélanges à base de caoutchouc non vulcanisé.

Le profilé 2 peut par exemple être destiné à former une bande de roulement d'un bandage, notamment d'un bandage pneumatique, ou à tout le moins être destiné à entrer dans la constitution d'un tel bandage pneumatique.

A titre indicatif, le profilé 2 pourra présenter une épaisseur E2 voulue, dite « épaisseur nominale » E2, qui sera comprise entre 0,3 mm et 25 mm, par exemple entre 0,3 mm et 15 mm, notamment entre 0,3 mm et 3 mm, et en particulier entre 1 mm et 3 mm, par exemple de l'ordre de 1,5 mm à 2 mm.

De façon connue en soi, la machine 1 comprend une filière 3 pour générer ledit profilé 2 à partir dudit ou desdits matériaux extrudés.

Ladite filière 3 permet de réunir lesdits matériaux en un profilé 2, en conformant et en répartissant lesdits matériaux au sein dudit profilé, et de conférer à la section dudit profilé 2 la forme et les dimensions souhaitées.

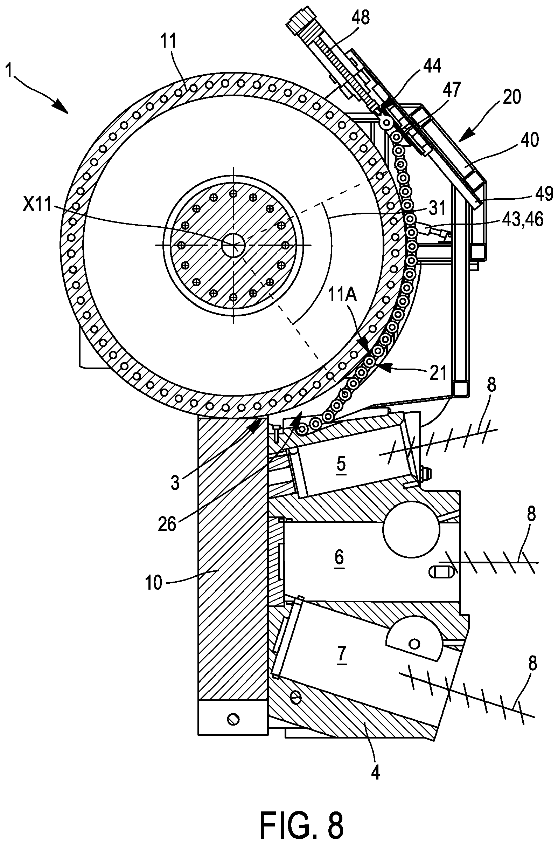

La machine 1 comprend également une tête d'extrusion 4, qui est agencée pour être raccordée à au moins une extrudeuse 8, et de préférence à plusieurs extrudeuses 8, représentées très schématiquement sur la figure 8.

Ladite tête d'extrusion 4 comporte une ou des voies 5, 6, 7 correspondantes pour acheminer le ou les matériaux en provenance desdites extrudeuses 8 à travers un outillage 10 jusqu'à la filière 3.

Les extrudeuses 8 sont de préférence des extrudeuses à vis, comprenant un fourreau dans lequel au moins une vis est montée en rotation, pour malaxer et propulser le mélange. La vis tourne de préférence autour de son propre axe central longitudinal, lequel coïncide préférentiellement avec l'axe central longitudinal du fourreau. Chaque fourreau peut être fixé à la tête 4 par un système de bridage approprié, de sorte à déboucher dans la voie 5, 6, 7 attribuée à l'extrudeuse 8 concernée.

Bien entendu, dans l'absolu, on pourrait, sans sortir du cadre de l'invention, remplacer les extrudeuses 8 par d'autres dispositifs assurant une fonction équivalente d'alimentation en matériau, tels que par exemple des pompes à engrenage, des pompes volumétriques à vis ou des pompes à pistons.

L'outillage 10 peut par exemple être formé par une cassette 10 comportant plusieurs plaques qui sont empilées parallèlement les unes contre les autres, selon des plans de joint sensiblement parallèles à la direction générale de progression du ou des mélanges à travers l'outillage 10, et qui sont ajourées de sorte à former des canaux qui relient les voies 5, 6, 7 de la tête 4 à la filière 3.

En sortie de la filière 3, le profilé 2 s'étend en longueur, en formant avantageusement un bloc continu, selon une direction dite « direction longitudinale » L0.

Par commodité de description, on pourra considérer que cette direction longitudinale L0 correspond à la trajectoire que l'on souhaite conférer au profilé 2 à travers la machine, en aval de la filière 3.

La machine 1 d'extrusion selon l'invention comprend également un organe de réception 11, tel qu'un rouleau principal refroidisseur, qui possède une surface de réception 11A destinée à recevoir le profilé 2 qui sort de la filière 3 et à permettre audit profilé d'avancer selon la direction longitudinale L0.

Ladite surface de réception 11A est agencée de manière à ce que le profilé 2 puisse venir reposer sur ladite surface de réception 11A, et/ou de préférence puisse adhérer à ladite surface de réception 11A, et à ce que ladite surface de réception 11A accompagne le mouvement d'avance du profilé 2 dans la direction longitudinale L0.

A cet effet, la machine d'extrusion 1 comprend avantageusement un bâti 12 qui porte l'organe de réception 11, et ledit organe de réception 11, et plus particulièrement sa surface de réception 11A, est avantageusement monté mobile sur le bâti 12, de sorte à pouvoir accompagner, et de préférence de sorte à pouvoir entraîner activement, le profilé dans le mouvement d'avance F2 dudit profilé 2 selon la direction longitudinale L0.

Dans l'absolu, on pourrait envisager un organe de réception 11 de toute nature, par exemple sous forme d'un convoyeur à bande, dont la surface apparente de la bande formerait la surface de réception 11A. Ladite bande pourrait suivre toute trajectoire de tracé conforme à la direction longitudinale L0, et par exemple une trajectoire rectiligne, une trajectoire incurvée et bombée, ou une trajectoire en forme de ligne brisée.

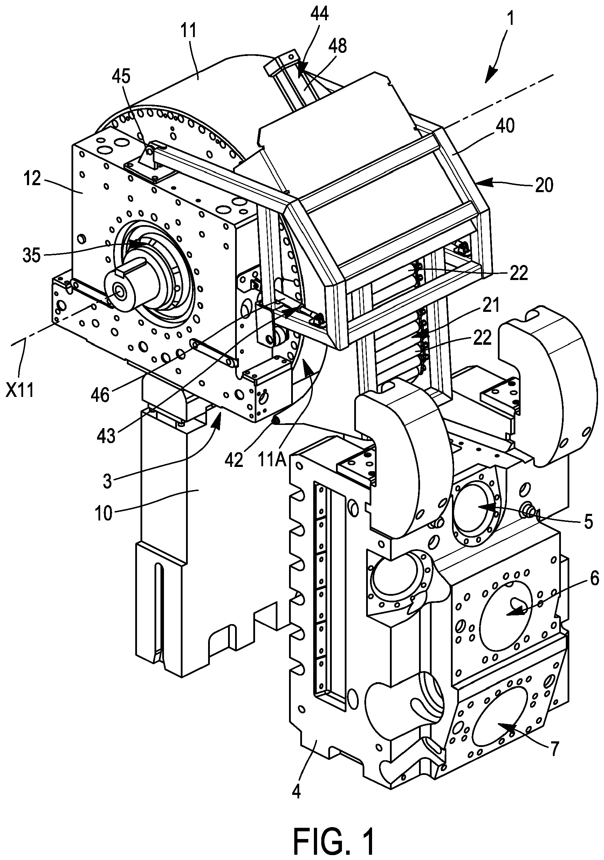

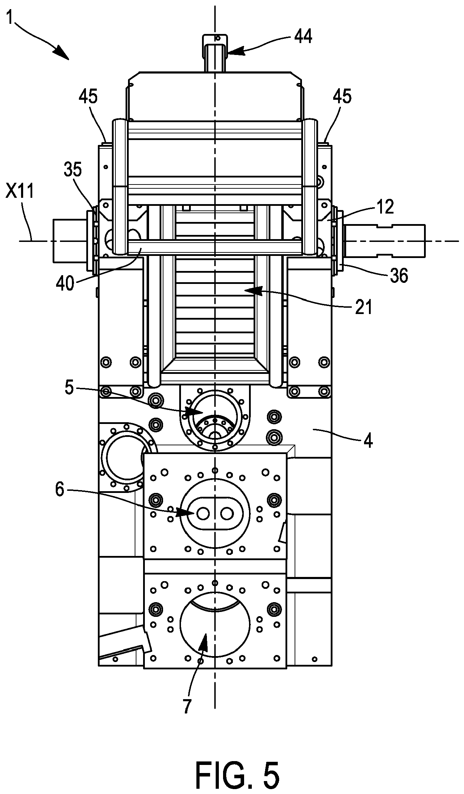

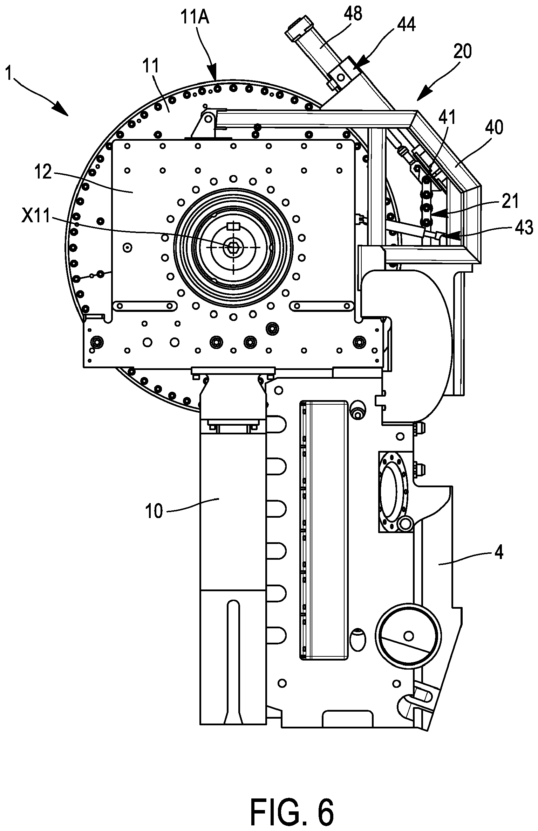

Toutefois, de façon préférentielle, et tel que cela est visible sur les figures 1 à 13, l'organe de réception 11 est formé par un rouleau principal 11 qui est centré sur un axe principal X11, autour duquel ledit rouleau principal 11 est monté en rotation.

Un tel agencement permet notamment d'obtenir une machine 1 relativement compacte, et facilite une prise en charge douce du profilé 2, notamment en ceci que l'accompagnement et l'entraînement du profilé 2 par le rouleau principal 11 s'opère par enroulement tangentiel du profilé 2 sur la circonférence dudit rouleau principal 11, et se poursuit selon une courbure qui possède un grand rayon, égal au rayon du rouleau principal 11, ce qui évite d'induire une forte contrainte ou une forte déformation, notamment un pli, dans le profilé 2.

En outre, le contrôle de la rotation d'un tel rouleau principal 11 est relativement simple à mettre en oeuvre, et permet d'obtenir un fonctionnement régulier, sans heurt, en régime établi.

Par commodité de description, on pourra assimiler organe de réception 11 et rouleau principal 11 dans ce qui suit, et donc utiliser une même référence 11 pour désigner ces objets.

Le rouleau principal 11 selon l'invention présente une forme de révolution autour de l'axe principal X11, de préférence une forme cylindrique de base circulaire.

Le diamètre du rouleau principal 11 est choisi suffisant pour que sa circonférence, et plus particulièrement la portion de sa circonférence couverte par le profilé en régime établi, permette, notamment au regard de la vitesse linéaire de formation et de progression du profilé 2, et donc au regard de la durée de passage dudit profilé 2 sur la surface de réception 11A, un refroidissement et une stabilisation dimensionnelle satisfaisants dudit profilé 2.

A titre indicatif, le diamètre dudit rouleau principal sera de préférence compris entre 15 cm et 300 cm.

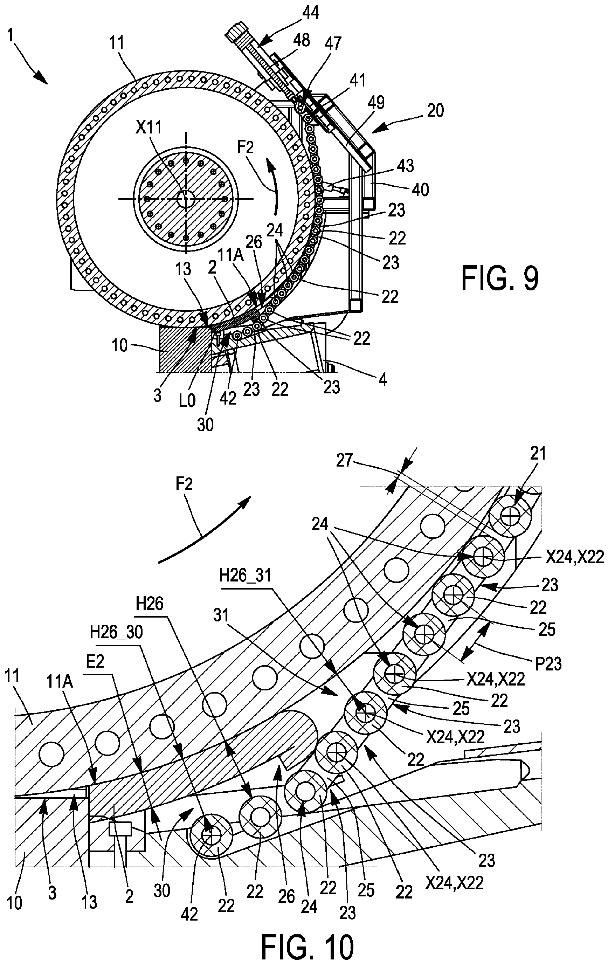

Selon un agencement préférentiel, et tel que cela est illustré schématiquement sur les figures 9, 10, 11, 12, 13, le rouleau principal 11 forme, avec la filière 3, un entrefer 13 qui définit l'épaisseur E2 du profilé 2.

En d'autres termes, la filière 3 débouche dans un entrefer 13 qui est délimité d'une part par ladite filière 3, qui forme une paroi de conformation fixe correspondant à la partie aval terminale de la tête d'extrusion 4, et d'autre part par la surface de réception 11A du rouleau principal 11, qui forme ainsi une paroi de conformation mobile, et qui confère donc au profilé 2, en coopérant avec la filière 3, l'épaisseur E2 voulue.

En pratique, l'épaisseur E2 du profilé sera définie par la hauteur de l'entrefer 13, c'est-à-dire la distance qui sépare, radialement à l'axe principal X11, la surface de réception 11A de la face terminale de la filière 3 qui se trouve en vis-à-vis de ladite surface de réception 11A, à l'extrémité aval de la cassette d'outillage 10.

A ce titre, la filière 3 présentera de préférence une face terminale concave, de préférence cylindrique de base circulaire, qui épouse sensiblement la forme du rouleau principal 11.

De préférence, le rouleau principal 11, et plus particulièrement l'axe principal X11, sera situé au-dessus de la filière 3, c'est-à-dire à une altitude supérieure à l'altitude de ladite filière 3, qui alimentera donc l'entrefer 13 par le dessous.

En outre, l'axe principal X11 sera de préférence horizontal.

Un tel agencement de rouleau principal 11 permettra notamment à la machine de conserver une bonne compacité, et facilitera l'accès au rouleau principal 11, et plus globalement aux parties internes de la machine 1, pour les opérations de maintenance.

De préférence, le rouleau principal 11 formera un rouleau principal refroidisseur, au contact duquel le profilé 2 extrudé se refroidira après sa sortie de la filière 3.

A cet effet, le rouleau principal 11 pourra être pourvu d'un système de régulation thermique, et plus particulièrement d'un circuit de refroidissement, par exemple un circuit utilisant de l'air ou de l'eau comme fluide caloporteur, afin de réguler la température de la surface de réception 11A.

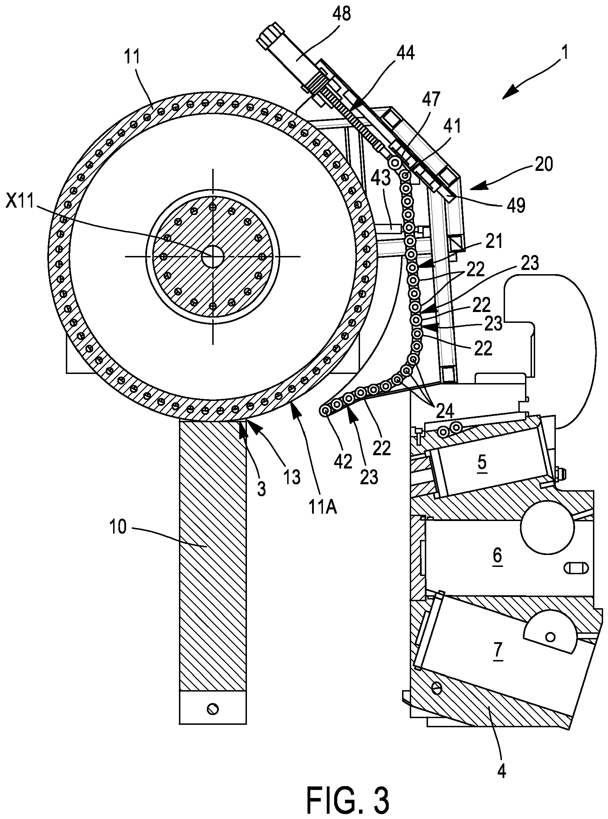

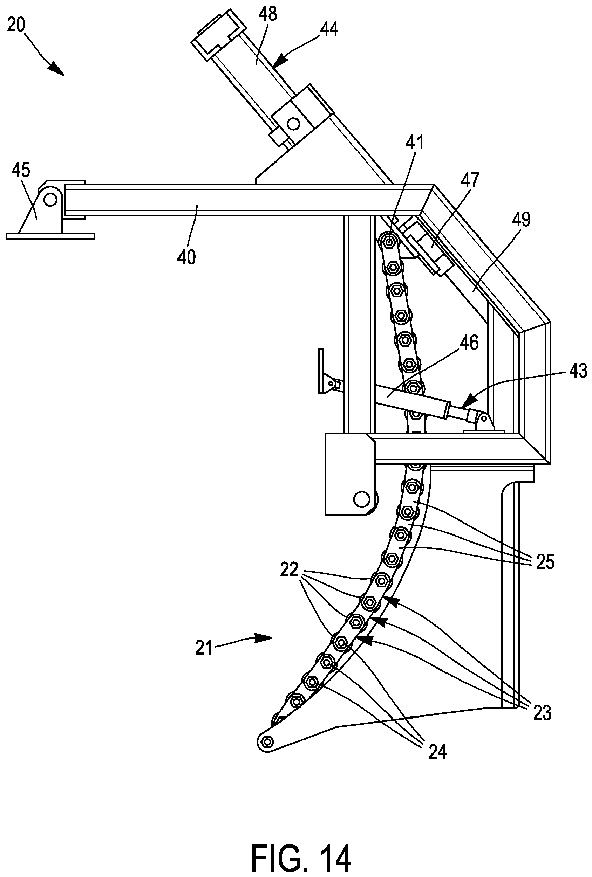

Selon l'invention, la machine d'extrusion 1 comprend un dispositif de guidage 20 qui comporte une chaîne 21 articulée à rouleaux auxiliaires 22 comprenant une pluralité de maillons 23, tel que cela est bien visible sur les figures 3 et 7 à 16.

Ces maillons 23 sont pourvus de rouleaux auxiliaires 22 montés rotatifs et sont connectés deux à deux par des articulations 24 qui permettent un libre basculement desdits maillons 23 les uns par rapport aux autres.

Les rouleaux auxiliaires 22 sont de préférence fous, c'est-à-dire monté en libre rotation sur leurs maillons 23 respectifs, chacun autour d'un axe de rotation X22.

De préférence, au moins une partie, et de préférence la totalité, des rouleaux auxiliaires 22 de la chaîne 21 présentent des axes de rotation X22 qui sont parallèles entre eux.

En outre, lesdits axes de rotation X22 de l'au moins une partie, voire de la totalité, des rouleaux auxiliaires 22 sont de préférence parallèles à la surface de réception 11A.

Lesdits axes de rotation X22 sont, de surcroît, préférentiellement transverses à la direction longitudinale L0, et plus préférentiellement perpendiculaires à la direction longitudinale L0.

Ainsi, tel qu'on le verra ci-après, lorsque le profilé 2 avance dans la direction longitudinale L0, en s'éloignant de la filière 3 dont il est issu, ledit profilé 2 peut avantageusement être guidé par les rouleaux auxiliaires 22 de façon fluide, en roulant sur le tapis de rouleaux auxiliaires 22 que forme la chaîne 21.

De préférence, les axes de rotation X22 des rouleaux auxiliaires 22 de la chaîne 21 sont parallèles à l'axe principal X11 du rouleau principal 11.

Ainsi, on pourra avantageusement amener la chaîne 21 et les rouleaux auxiliaires 22 selon un abord tangent à la surface de réception 11A, et faciliter le cas échéant la rotation des rouleaux auxiliaires 22 au contact de ladite surface de réception 11A et/ou au contact du profilé 2 lorsque ledit profilé 2 est entraîné par le rouleau principal 11, solidairement avec ladite surface de réception 11A, en rotation autour de l'axe principal X11.

Il en ira de préférence de même pour les axes X24 de basculement des maillons 23, qui seront de préférence parallèles aux axes de rotation X22 des rouleaux auxiliaires, de préférence parallèles entre eux, de préférence parallèles à la surface de réception 11A, de préférence transverses à la direction longitudinale L0 et plus préférentiellement perpendiculaires à ladite direction longitudinale L0, et/ou qui seront de préférence parallèles à l'axe principal X11 du rouleau principal 11.

Ces agencements permettront aux maillons 23 de basculer pour adapter la forme de la chaîne 21, et notamment permettront à ladite chaîne 21 d'épouser sensiblement, par abord latéral tangent, la forme de la surface de réception 11A, et ceci que ladite surface de réception 11A soit ou non recouverte du profilé 2.

La longueur de chaque rouleau auxiliaire 22, considérée le long de l'axe X22 du rouleau auxiliaire considéré, sera de préférence égale ou supérieure à la largeur du profilé 2, considérée perpendiculairement à la direction longitudinale L0 et parallèlement à la surface de réception 11A.

Ainsi, chaque rouleau auxiliaire 22 qui viendra au contact du profilé 2 pourra exercer un appui ininterrompu et relativement homogène sur toute la largeur du profilé 2, ce qui évitera notamment de déformer ou de marquer le profilé 2.

De préférence, la longueur axiale de chaque rouleau auxiliaire sera comprise entre 40 % et 120 % de la largeur de la surface de réception 11A, considérée perpendiculairement à la direction longitudinale L0, et plus préférentiellement comprise entre 40 % et 120 %, notamment entre 50 % et 80 %, de la longueur axiale du rouleau principal 11, c'est-à-dire de la dimension dudit rouleau principal considérée selon l'axe principal X11. La chaîne 21 pourra ainsi couvrir une largeur suffisante pour prendre en charge le profilé 2, tout en restant relativement compacte de sorte à, de préférence, ne pas déborder axialement au-delà du rouleau principal 11.

En outre, la longueur de chaque rouleau auxiliaire 22 sera de préférence strictement supérieure au diamètre maximal dudit rouleau auxiliaire, et par exemple 5 à 10 fois supérieure, voire 20 fois supérieure, audit diamètre maximal.

Le diamètre des rouleaux auxiliaires 22 étant relativement petit, et par exemple compris entre 10 mm et 100 mm, le pas d'incrément P23 entre deux maillons 23 successifs, qui correspond de préférence à l'entraxe entre deux rouleaux auxiliaires 22 consécutifs, pourra être relativement fin, et par exemple, notamment si l'on vise un interstice 27 entre rouleaux auxiliaires 22 successifs qui soit de l'ordre de 1 mm, ledit pas d'incrément P23 pourra être compris entre 11 mm (= 10 mm + 1 mm) et 101 mm (= 100 mm + 1 mm).

Avantageusement, l'utilisation de rouleaux auxiliaires 22 longs et relativement fins, et d'un pas d'incrément P23 relativement court, permettra d'obtenir une bonne compacité des rouleaux auxiliaires 22 et des maillons 23, et donc une grande finesse de réglage dans la forme de la chaîne 21 par basculement relatif des maillons 23, tout en assurant une bonne répartition de l'appui du ou des rouleaux auxiliaires 22 concernés sur toute la largeur du profilé 2.

De préférence, par souci de standardisation et commodité de fabrication, la majorité, et de préférence la totalité des rouleaux auxiliaires 22 de la chaîne 21 présenteront les mêmes dimensions, et plus globalement seront identiques les uns aux autres en formes et en dimensions.

Les rouleaux auxiliaires 22 pourront présenter toute forme de révolution adaptée autour de leurs axes de rotation X22 respectifs.

Ceci étant, de préférence, les rouleaux auxiliaires 22 seront formés par des cylindres droits de base circulaire, et présenteront ainsi un diamètre constant sur leur longueur.

Une telle forme assurera un guidage précis et homogène du profilé 2.

Les maillons 23 comprendront par ailleurs des entretoises 25 qui soutiennent les rouleaux auxiliaires 22 et les articulations 24, au moyen de liaisons pivots qui matérialisent respectivement les axes de rotation X22 desdits rouleaux auxiliaires 22, et les axes de basculement X24 desdites articulations 24.

De préférence, les entretoises 25 seront formées par des plaques, par exemple sensiblement parallélépipédiques, possédant de préférence des extrémités arrondies. Lesdites plaques pourront être percées dans leur épaisseur pour recevoir les axes de rotation X22 et les axes de basculement X24. Les extrémités des axes X22, X24 pourront être maintenues axialement en butée contre les entretoise 25 par tout moyen approprié, par exemple au moyen d'un anneau élastique (« circlips ») ou d'un écrou à rondelle.

Les entretoises 25, et plus particulièrement les plaques correspondantes, pourront être réalisées dans tout matériau rigide approprié, notamment en métal, par exemple en acier ou en alliage d'aluminium, ou bien dans un polymère rigide, éventuellement un polymère composite renforcé par des fibres de renfort du genre fibres de verre ou d'aramide.

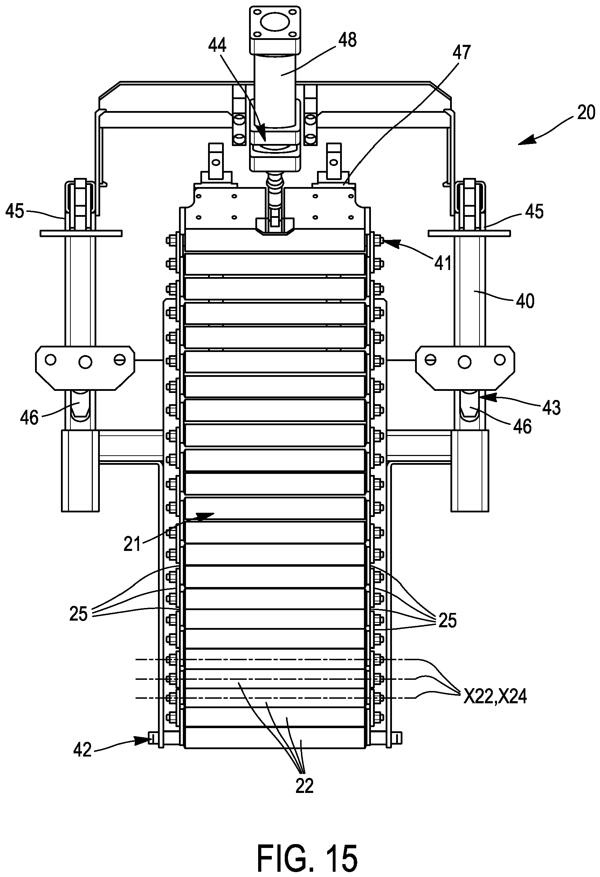

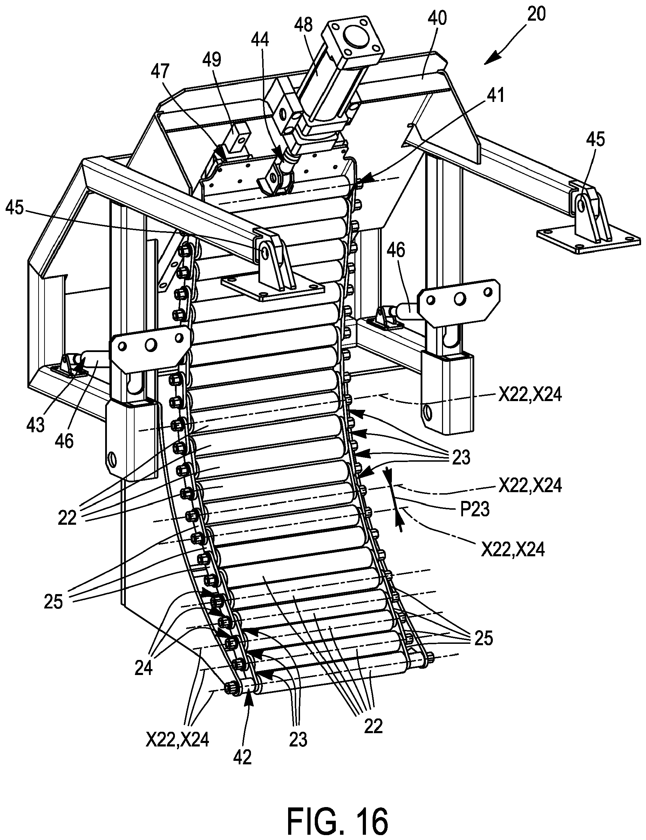

De préférence, tel que cela est bien visible sur les figures 15 et 16, chaque maillon 23 possédera deux entretoises 25, l'une à chaque extrémité axiale du rouleau auxiliaire 22 porté par le maillon 23 concerné.

Bien entendu, le diamètre de chaque rouleau auxiliaire 22 sera suffisant pour que la surface du rouleau auxiliaire 22 fasse saillie en débord des entretoises 25, au moins en direction de la surface de réception 11A, afin que le rouleau auxiliaire 22 puisse venir au contact du profilé 2 sans que les entretoises 25 n'interfèrent avec le profilé 2.

De façon préférentielle, le diamètre de chaque rouleau auxiliaire 22 est strictement supérieur à la hauteur hors-tout des entretoises 25 qui portent ledit rouleau auxiliaire 22, de sorte que ledit rouleau fait saillie de part et d'autre des bords de l'entretoise 25, du côté de la surface de réception 11A mais également du côté opposé.

De préférence, tel que cela est notamment visible sur la figure 16, les axes de rotation X22 des rouleaux auxiliaires 22 de la chaîne 21 coïncident avec les axes de basculement X24 des articulations 24 des maillons 23.

Ainsi, chaque maillon 23 pourra pivoter, et donc basculer, par rapport au maillon 23 voisin, et plus précisément chaque entretoise 25 pourra basculer par rapport à l'entretoise 25 voisine, tout en autorisant une libre rotation du rouleau auxiliaire 22 au sein du maillon 23, par rapport à l'entretoise 25, grâce à un agencement simple, léger et compact qui utilise un seul et même pivot pour matérialiser les deux axes, respectivement l'axe de rouleau X22 et l'axe de basculement X24, qui sont ici confondus l'un avec l'autre.

Chaque entretoise 25, rigide, pourra ainsi de préférence relier l'axe de rotation X22 d'un rouleau auxiliaire 22 à l'axe de rotation X22 du rouleau auxiliaire 22 immédiatement voisin, et, de la sorte, fixer l'entraxe P23 qui sépare ces deux rouleaux auxiliaires 22 consécutifs.

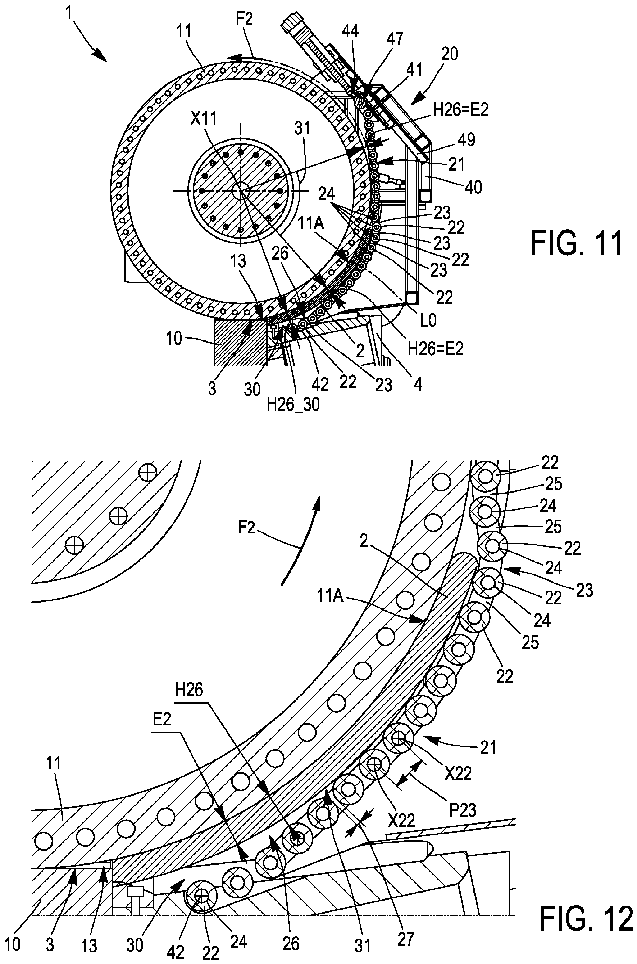

Selon l'invention, le dispositif de guidage 20 est agencé pour pouvoir placer la chaîne 21 en vis-à-vis de la surface de réception 11A, en aval de la filière 3 selon la direction longitudinale L0, dans (au moins) une configuration dite « configuration d'engagement» selon laquelle, tel que cela est notamment illustré sur les figures 8, 9, 10, 11, 12, au moins une partie des rouleaux auxiliaires 22 portés par des maillons 23 successifs de ladite chaîne 21 délimitent, avec la surface de réception 11A, un chemin de guidage 26 qui s'étend selon la direction longitudinale L0 de manière à ce que le profilé 2 puisse s'engager (figures 9, 10) et progresser (figures 11, 12) dans ledit chemin de guidage 26, entre lesdits rouleaux auxiliaires 22 et la surface de réception 11A, et que lesdits rouleaux auxiliaires 22 puissent plaquer ledit profilé 2 contre la surface de réception 11A (figures 10, 12).

Au sein de la chaîne 21, les rouleaux auxiliaires 22 voisins seront séparés l'un de l'autre par un interstice 27, de sorte à éviter toute friction entre lesdits rouleaux auxiliaires 22 voisins. Chaque rouleau auxiliaire 22 pourra ainsi être mis en libre rotation indépendamment des rouleaux auxiliaires 22 voisins.

La taille de l'interstice 27 correspond en pratique à la différence entre la valeur de l'entraxe P13 et la valeur d'un diamètre (deux rayons) des rouleaux auxiliaires 22 concernés.

Ledit interstice 27 sera en revanche suffisamment étroit pour que la distance séparant deux rouleaux auxiliaires 22 consécutifs, considérée selon la direction longitudinale L0, soit strictement inférieure à l'épaisseur E2 du profilé 2, par exemple inférieure à 2 mm, et en particulier comprise entre 0,5 mm et 1,5 mm, de manière à ce que la chaîne 21 forme un tapis de rouleaux 22 suffisamment jointifs pour que ledit profilé 2 ne puisse pas traverser la chaîne 21 en passant entre deux rouleaux auxiliaires 22, et donc de manière à ce que ledit profilé 2 reste ainsi contenu dans le chemin de guidage 26.

Avantageusement, la flexibilité de la chaîne 21 permet à ladite chaîne 21 de capter, puis de guider et au besoin de rabattre en douceur le profilé 2 contre la surface de réception 11A, au fur et à mesure que ledit profilé progresse le long des maillons 23 successifs, et donc le long des rouleaux auxiliaires 22 successifs, qui sont répartis, d'amont en aval, le long de la direction longitudinale L0.

Toute portion du profilé 2, et en particulier la portion frontale du profilé, qui tendrait à dévier initialement de la direction longitudinale L0 attendue, et donc à diverger de la surface de réception 11A, est avantageusement interceptée par la chaîne 21 puis rabattue et plaquée contre la surface de réception 11A.

De préférence, ceci permet d'assurer une bonne adhérence dudit profilé 2 sur la surface de réception 11A, préférentiellement du simple fait du propre collant (« tack ») naturel du matériau constitutif dudit profilé 2, en particulier lorsqu'il s'agit d'un matériau à base de caoutchouc cru, c'est-à-dire non vulcanisé.

En définitive, dans au moins un tronçon du chemin de guidage 26, qui comporte au moins un rouleau auxiliaire 22, et de préférence plusieurs rouleaux auxiliaires 22 portés par plusieurs maillons 23 successifs, le profilé 2 qui chemine dans ledit chemin de guidage 26 est avantageusement pris en sandwich, dans le sens de son épaisseur E2, entre la surface de réception 11A d'une part, à laquelle ledit profilé 2 adhère par une première face, et lesdits rouleaux auxiliaires 22 d'autre part, sur lesquels ledit profilé 2 roule par une seconde face opposée à la première face, de sorte que ledit profilé 2 est convenablement engagé et maintenu par pincement contre la surface de réception 11A.

Le maintien du profilé 2 par la chaine 21 à l'encontre de la surface de réception 11A peut avantageusement être assuré aussi longtemps que souhaité et sur une distance aussi longue que souhaitée le long de la direction longitudinale L0.

Lorsque la chaîne 21 est en configuration d'engagement et le profilé 2 totalement engagé dans le chemin de guidage 26, le maintien du profilé 2 par la chaîne 21 peut par exemple s'étendre, de préférence en continu, sur un tronçon dudit chemin de guidage 26 qui couvre un secteur angulaire de la circonférence du rouleau principal 11 compris entre 20 degrés et 270 degrés autour de l'axe principal X11, et notamment compris entre 20 degrés et 120 degrés, par exemple entre 45 degrés et 90 degrés, comme le permet par exemple la configuration d'engagement représentée sur les figures 8, 9 et 10.

L'étendue dudit secteur angulaire pourra notamment dépendre du degré d'adhérence du profilé 2 sur la surface de réception 11A, c'est-à-dire du collant (« tack ») dudit profilé 2. Ainsi, par exemple, si le profilé 2 est peu collant et requiert donc un guidage sur une longue distance, alors on pourra faire en sorte que la chaîne 21 maintienne le profilé contre le rouleau principal 11 sur au moins 180 degrés (soit sur un demi-tour) autour de l'axe principal X11, voire jusqu'à 270 degrés (soit sur trois-quarts de tour) autour de l'axe principal X11. A l'inverse, si le profilé 2 est relativement collant, et ne nécessite qu'un maintien moindre, pour l'essentiel lors de l'engagement initial dudit profilé 2 contre le rouleau principal 11, alors la distance de guidage pourra être plus courte, et notamment correspondre à un secteur angulaire compris entre 20 degrés et 90 degrés, voire seulement entre 20 degrés et 60 degrés, autour de l'axe principal X11.

Le tronçon du chemin de guidage 26 qui est agencé pour être suffisamment étroit pour que les rouleaux auxiliaires 22 de la chaîne 21 bordant ledit tronçon entrent nécessairement au contact du profilé 2 lorsque ledit profilé 2 progresse au contact de la surface de réception 11A sera dit « zone d'étranglement » 31.

Par convention, la zone d'étranglement 31 pourra correspondre à la portion de la longueur de la surface de réception 11A, ou ici plus particulièrement au secteur angulaire dont l'arc correspond à ladite longueur de surface de réception 11A, qui, tel que cela est notamment visible sur la figure 11, débute lorsque la distance entre la surface de réception 11A et les rouleaux auxiliaires 22, dite « hauteur d'ouverture » H26 du chemin de guidage 26, devient égale ou inférieure à l'épaisseur E2 voulue (en régime établi) pour le profilé 2, dite « épaisseur nominale » du profilé, et qui se termine lorsque cesse la chaîne 21 ou lorsque la distance entre les rouleaux auxiliaires 22 et la surface de réception 11A redevient définitivement, le long de la direction longitudinale L0, supérieure à ladite épaisseur E2 nominale du profilé.

De préférence, en configuration d'engagement, la plus petite distance qui, dans le chemin de guidage 26 destiné à être emprunté par le profilé 2, sépare initialement, c'est-à-dire avant le passage du profilé 2, la surface de réception 11A du ou des rouleaux auxiliaires 22 de la chaîne 21 qui sont les plus proches de ladite surface de réception 11A, c'est-à-dire la plus petite hauteur d'ouverture H26 du chemin de guidage 26 au repos, est strictement inférieure à une épaisseur E2 voulue prédéterminée du profilé, dite « épaisseur nominale ».

Ainsi, on s'assure que, dans le tronçon correspondant du chemin de guidage 26, qui appartient à la zone d'étranglement 31, la chaîne 21 exerce un effort d'appui effectif, ici un effort radial centrifuge dirigé vers l'axe principal X11, qui presse le profilé 2 contre la surface de réception 11A.

Ceci étant, afin d'éviter un bourrage et un blocage du profilé 2 dans le chemin de guidage 26, et plus particulièrement dans la zone d'étranglement 31, la flexibilité de la chaîne 21 procurée par les articulations 24 des maillons 23 permettra alors avantageusement auxdits rouleaux auxiliaires 22 de s'écarter de la surface de réception 11A lors du passage du profilé 2 afin d'accommoder l'épaisseur E2 effective dudit profilé, tel que cela est notamment bien visible sur les figures 10 et, surtout, 11 et 12.

La chaîne 21 sera en effet positionnée par rapport à la surface de réception 11A de façon suffisamment lâche pour rester flexible dans une mesure suffisante pour que les maillons 23 puissent opérer un recul, ici de préférence un recul radial centrifuge par rapport à l'axe principal X11, afin d'éloigner leurs rouleaux auxiliaires 22 de la surface de réception 11A et ainsi dégager, entre lesdits rouleaux auxiliaires 22 et la surface de réception 11A, un espace juste nécessaire et suffisant pour permettre le passage de l'épaisseur E2 du profilé.

Avantageusement, du simple fait que la chaîne 21 ainsi écartée tend à revenir vers sa position de repos, par effet élastique et/ou sous l'effet de la gravité, ladite chaîne 21 peut exercer une légère pression sur le profilé 2, qui plaque ledit profilé 2 contre la surface de réception 11A sans endommager ledit profilé 2 ni en altérer la forme.

On notera en outre qu'un guidage à chaîne 21 selon l'invention est particulièrement polyvalent, puisqu'il peut s'adapter à de nombreux types de profilés, présentant des épaisseurs E2 nominales différentes.

On notera également que la plus petite hauteur d'ouverture H26 du chemin de guidage 26 au repos, avant l'introduction du profilé 2 dans la zone concernée, peut être sensiblement nulle, de sorte qu'au moins un rouleau auxiliaire 22 de la zone d'étranglement 31, et de préférence plusieurs rouleaux auxiliaires 22 consécutifs, se trouvent initialement au contact de la surface de réception 11A, avant que le profilé 2 ne s'introduise sous les maillons 23 correspondants et n'écarte en conséquence la chaîne 21 de la surface de réception 11A.

De préférence, tel que cela est notamment bien visible sur les figures 8 et 10, en configuration d'engagement, la chaîne 21 forme un agencement convergent avec la surface de réception 11A, de sorte que le chemin de guidage 26 va en se rétrécissant d'amont en aval le long de la direction longitudinale L0, depuis une zone d'admission 30 qui accueille le profilé 2 jusqu'à une zone d'étranglement 31 qui est plus étroite que la zone d'admission 30, c'est-à-dire qui présente une hauteur d'ouverture H26_31 inférieure à la hauteur d'ouverture H26_30 de la zone d'admission 30, et qui est apte à rabattre le profilé 2 vers et contre la surface de réception 11A.

Ainsi, les rouleaux auxiliaires 22 successifs peuvent capter le profilé 2 et le guider en le rabattant progressivement contre la surface de réception 11A, au fur et à mesure que ledit profilé 2 progresse selon la direction longitudinale L0. On s'assure ainsi que le profilé 2 vient épouser en douceur la surface de réception 11A, par abord tangentiel.

Avantageusement, la zone d'admission 30 sera configurée de manière à pouvoir avaler le profilé 2, et notamment le front avant du profilé 2, sans occasionner de bourrage, et ce quelle que soit la façon dont se présente ledit profilé 2, et en particulier si ledit profilé 1 présente une surépaisseur de type bourrelet ou pli frontal, qui confère localement audit profilé 2 une épaisseur E2 supérieure à son épaisseur nominale, ou bien si ledit profilé 2 tend à dévier de la direction longitudinale L0, par exemple en se décollant et se redressant par rapport à la surface de réception 11A, de sorte que, par analogie, le profilé présente une surépaisseur apparente par rapport à son épaisseur E2 nominale.

La hauteur d'ouverture H26_30 de la zone d'admission 30 sera donc dimensionnée de sorte à pouvoir absorber toute surépaisseur prévisible du profilé.

A cet effet, dans la zone d'admission 30, le chemin de guidage 26 présente de préférence, dans le sens de l'épaisseur E2 du profilé, et tel que cela est notamment visible sur la figure 10, une première hauteur d'ouverture H26_30, dite « hauteur d'avalement » H26_30, qui est égale ou supérieure à 1,5 fois une épaisseur E2 voulue prédéterminée du profilé dite « épaisseur nominale », voire égale ou supérieure à 2 fois l'épaisseur nominale E2 du profilé, de préférence comprise entre 1,5 fois et 5 fois l'épaisseur nominale E2 du profilé, et plus préférentiellement comprise entre 1,5 fois et 3 fois l'épaisseur nominale du profilé, par exemple comprise entre 2 fois et 2,5 fois l'épaisseur nominale E2 du profilé.

Afin d'assurer ensuite un rapprochement et un placage efficace du profilé 2 contre la surface de réception 11A, on prévoira de préférence que, dans la zone d'étranglement 31, située en aval de la zone d'admission 30, et tel que cela est notamment visible sur la figure 10, le chemin de guidage 26 présente, au moins avant que le profilé 2 ne s'engage à travers ladite zone d'étranglement 31, une seconde hauteur d'ouverture H26_31, dite « hauteur d'étranglement » H26_31, qui est égale ou inférieure à 1 fois l'épaisseur E2 nominale du profilé, de préférence inférieure ou égale à 0,5 fois l'épaisseur nominale du profilé. Ladite hauteur d'étranglement H26_31 pourra éventuellement être nulle de sorte que le ou les rouleaux auxiliaires 22 du ou des maillons 23 correspondants seront initialement au contact de la surface de réception 11A.

Lorsque la hauteur d'étranglement H26_31 est initialement inférieure à l'épaisseur E2 nominale du profilé 2, voire nulle, l'engagement et le passage du profilé 2 à travers la zone d'étranglement 31 aura pour effet d'écarter les maillons 23 et leur rouleaux auxiliaires 22 à une distance suffisante pour permettre le passage du profilé 2 sans contraindre excessivement ledit profilé 2.

De préférence, la hauteur d'étranglement H26_31 sera alors de fait portée, pendant le passage du profilé 2, à une valeur égale ou sensiblement égale à l'épaisseur E2 nominale du profilé.

On pourrait envisager que, par un réglage de la tension de la chaîne 21, la hauteur d'étranglement H26_31 reste légèrement inférieure à l'épaisseur nominale du profilé 2, et par exemple strictement comprise entre 95% et 99% de ladite épaisseur nominale du profilé 2, pendant le passage dudit profilé 2, de sorte à maintenir un certain effort de compression dans l'épaisseur du profilé, ici plus particulièrement un effort de compression radiale, qui plaque activement ledit profilé 2 contre la surface de réception, ici plus préférentiellement qui plaque le profilé 2 contre le rouleau principal 11 selon une direction radiale centripète orientée vers l'axe principal X11. L'enfoncement du profilé 2 sera cependant suffisamment faible pour éviter de déformer plastiquement ledit profilé 2 par laminage et d'en altérer définitivement l'épaisseur E2.

Comme indiqué plus haut, la machine d'extrusion 1 comprend un bâti 12 qui porte l'organe de réception 11.

Plus particulièrement, ledit bâti 12 peut comporter à cet effet des paliers 35, 36, par exemple à roulements à billes ou à rouleaux, qui matérialisent l'axe principal X11 et forment les pivots permettant la rotation du cylindre principal 11 autour dudit axe principal 11A, tel que cela est visible sur les figures 1, 4 et 5.

Le bâti 12 comporte de préférence également un moteur, tel qu'un moteur électrique, qui est piloté par une unité de commande, de préférence électronique, de sorte à pouvoir entraîner la surface de réception 11A en déplacement par rapport au bâti 12, et par rapport à la filière 3, ici de préférence pour entraîner le rouleau principal 11 en rotation autour de l'axe principal X11, selon une vitesse déterminée.

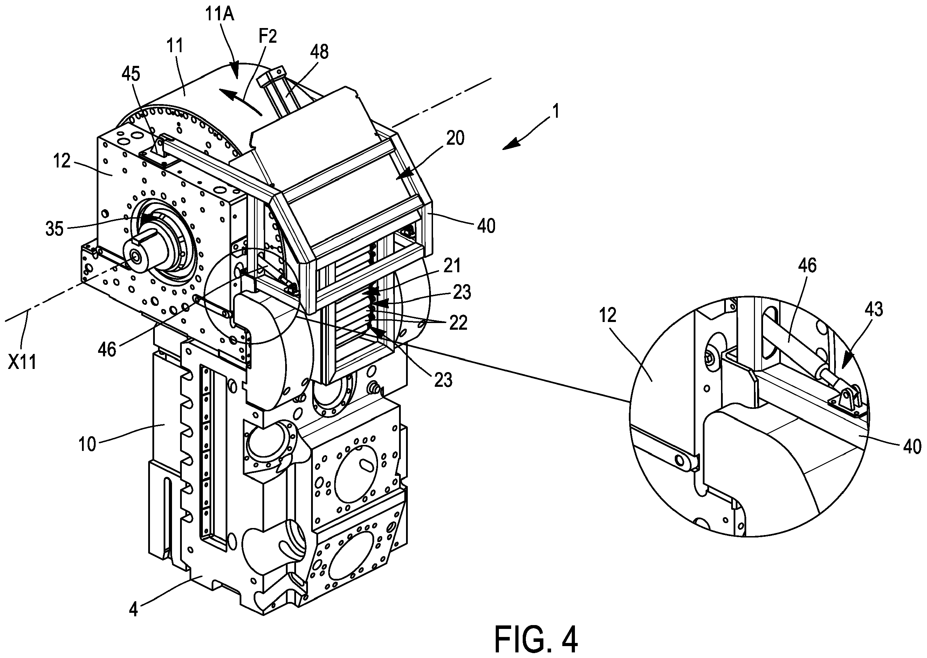

Ledit bâti 12 est en outre avantageusement agencé pour recevoir la tête d'extrusion 4, qui peut être par exemple guidée sur le bâti au moyen de rails afin d'adopter alternativement une configuration d'ouverture (figure 1) d'une part, dans laquelle ladite tête est écarté en retrait de l'outillage 10 pour permettre la purge et le nettoyage de ladite tête 4, ainsi que le nettoyage ou le changement de l'outillage 10, et une configuration de fermeture (figures 4, 7, 8, 9, 11) d'autre part, dans laquelle ladite tête 4 est serrée au contact étanche de l'outillage 10, de sorte à permettre aux extrudeuses 8 de débiter le ou les matériaux constitutifs du profilé à travers ledit outillage 10 et la filière 3.

De préférence, le dispositif de guidage 20 comprend un support 40 qui vient en prise sur le bâti 12 et qui porte la chaîne 21 au moyen d'un premier point d'ancrage 41 et d'un second point d'ancrage 42.

De préférence, le premier point d'ancrage 41 sert d'accroche au dernier maillon 23 de la chaîne 21, formant une extrémité de ladite chaîne, tandis que le second point d'ancrage 42 sert d'accroche au premier maillon 23 de la chaîne 21, formant l'autre extrémité de ladite chaîne.

De préférence, le premier et le second point d'ancrage 41, 42 forment des articulations 24, qui permettent aux maillons 23 correspondants de basculer par rapport au support 40, de préférence en pivot selon des axes X24 parallèles aux axes de rotation X22 des rouleaux.

Dans l'absolu, on pourrait envisager de doter le support 40 d'un ou plusieurs organes de conformation, tels que des galets, qui seraient agencés de manière à pouvoir venir en appui sur la chaîne 21, par exemple au dos de certaines entretoises 25, ou bien à la façon de chapes qui formeraient des paliers de pivot pour certains des axes d'articulation 24, et dont la position serait ajustable par rapport au support 40, de sorte que lesdits organes de conformation permettraient de configurer et modifier le tracé et/ou le degré de tension de la chaîne 21 entre les points d'ancrage 41, 42, en formant autant de points de passage obligés pour la chaîne 21. Une telle solution pourrait notamment être avantageuse si l'on souhaitait prévoir et définir avec précision et déterminisme un tracé de la chaîne 21 qui devrait couvrir plus de 180 degrés, et notamment 270 degrés, autour de l'axe principal X11, en passant par certains points de passage obligés qui devraient être situés à une distance prédéterminée de la surface de réception 11A afin de déterminer une hauteur H26 particulière du chemin de guidage 26.

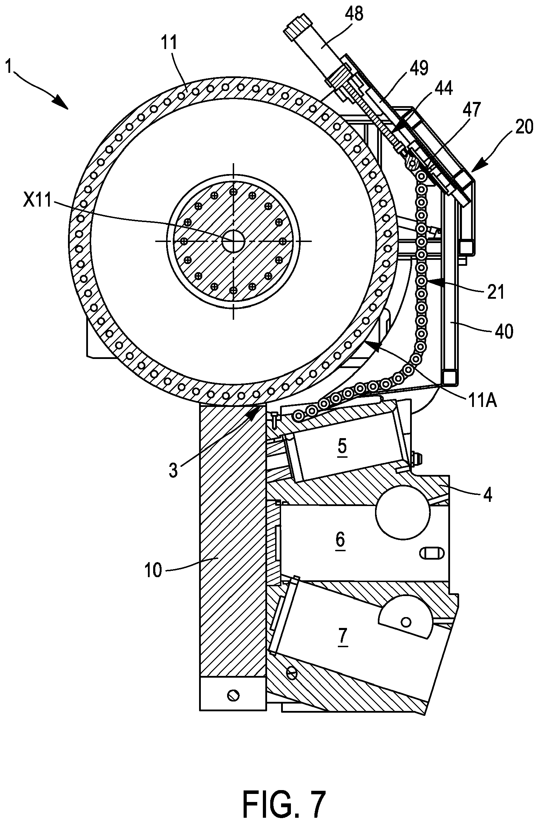

Toutefois, tel que cela est visible sur les figures 7 à 16, la portion de la chaîne 21 comprise entre le premier point d'ancrage 41 et le second point d'ancrage 42 est de préférence libre, c'est-à-dire dépourvue de point d'ancrage intermédiaire ou d'organe de conformation qui serait associé au support 40 et qui créerait, par rapport audit support 40, un point de passage intermédiaire forcé pour ladite chaîne entre les premier et second points d'ancrage 41, 42.

On obtiendra ainsi un système de guidage 20 particulièrement simple et léger, dont la chaîne 21 peut adapter très librement son tracé aux besoins du guidage.

Par ailleurs, la chaîne 21, et plus particulièrement la portion de chaîne 21 comprise entre le premier point d'ancrage 41 et le second point d'ancrage 42, forme de préférence, par souci de simplicité, de légèreté, et de commodité d'utilisation, une chaîne ouverte, en ceci qu'elle présente une seule ligne de maillons 23 disposés en enfilade les uns derrières les autres, rattachés et articulés chacun par rapport au maillon précédent et au maillon suivant par les articulations 24, et de préférence seulement par lesdites articulations 24.

De façon particulièrement préférentielle, la longueur de la chaîne 21 comprise entre le premier point d'ancrage 41 et le second point d'ancrage 42 est strictement supérieure à la distance qui sépare le premier point d'ancrage 41 du second point d'ancrage 42.

Avantageusement, cet excès de longueur de la chaîne 21 permet à la chaîne 21 de conserver une certaine laxité, qui lui permet notamment de s'incurver relativement librement, d'épouser la forme de la surface de réception 11A, et d'accommoder facilement l'épaisseur E2, ou les variations d'épaisseur E2, du profilé 2.

Selon une caractéristique préférentielle, le dispositif de guidage 20 comprend d'une part un mécanisme de positionnement 43 qui permet d'ajuster la position du support 40 par rapport au bâti 12, et donc d'ajuster de façon simultanée les positions respectives du premier point d'ancrage 41 et du second point d'ancrage 42, dans leur ensemble, par rapport audit bâti 12 et par rapport à l'organe de réception 11, et d'autre part un mécanisme tendeur 44 qui est embarqué sur le support 40 et qui permet de déplacer sélectivement le premier point d'ancrage 41 par rapport au second point d'ancrage 42 au sein dudit support 40, de sorte à modifier la forme du tracé de la chaîne 21 en vis-à-vis de la surface de réception 11A.

Le dispositif de guidage 20 peut donc adapter sa configuration, et notamment peut adapter le degré de relâchement ou de tension et/ou la forme du tracé de la chaîne 21, aux conditions requises pour accompagner le profilé 2, en fonction par exemple des dimensions du profilé 2 produit par la filière 3, et notamment en fonction de l'épaisseur E2 nominale dudit profilé 2.

Avantageusement, le mécanisme de positionnement 43 permet de manoeuvrer le support 40 et les points d'ancrage 41, 42 comme un unique sous-ensemble par rapport au bâti 12, et plus particulièrement à la manière d'un capot rabattable que l'on vient refermer sur le bâti 12, pour couvrir au moins partiellement le rouleau principal 11.

Par souci de simplicité et de légèreté, le support 40 peut être formé par une potence, de préférence un châssis mécano-soudé, qui épouse sensiblement le contour de la surface de réception 11A.

Tel que cela est notamment visible sur les figures 1 et 16, le mécanisme de positionnement 43 peut comprendre un ou des pieds basculants 45, qui viennent se fixer au bâti 12 et permettent audit support 40 de basculer par rapport au bâti 12.

Ce basculement du support par rapport au bâti 12 s'effectue de préférence autour d'un axe qui est parallèle aux axes X22 des rouleaux auxiliaires 22, parallèle à la surface de réception 11A, et/ou plus particulièrement parallèle à l'axe principal X11 du rouleau principal 11.

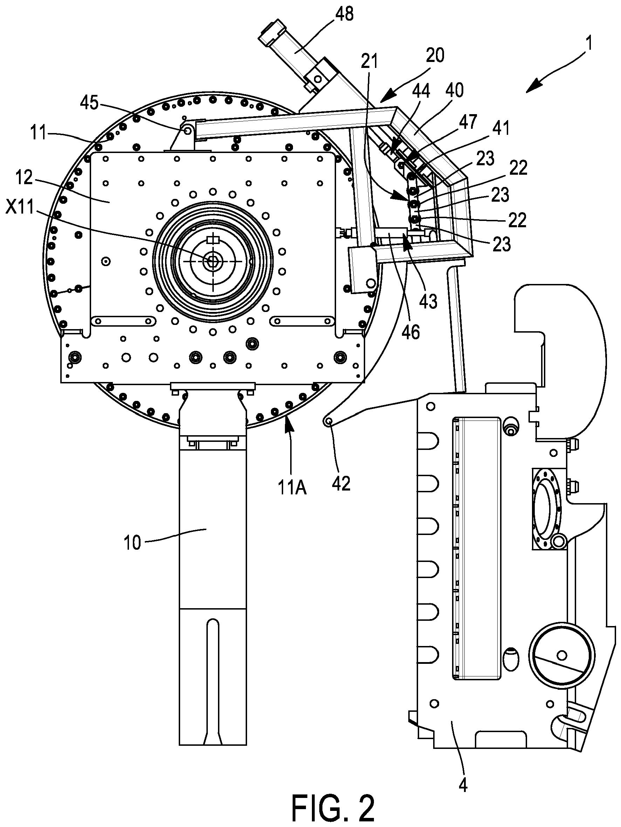

Le mécanisme de positionnement 43 peut également comprendre un ou des vérins de positionnement 46 qui sont interposés entre le bâti 12 et le support 40 de sorte à pouvoir commander le déplacement, ici plus particulièrement le basculement, du support 40 par rapport au bâti 12, entre une configuration ouverte (figures 1 et 2), dans laquelle le support 40 est relativement éloigné du bâti 12 et de la surface de réception 11A de manière à faciliter l'entretien de la machine, et une configuration fermée (figures 4, 7, 8, 9, 11), dans laquelle le support 40 est plus proche de la surface de réception 11A, de sorte à pouvoir utiliser effectivement le dispositif de guidage 20 lors de la production du profilé 2.

Le mécanisme tendeur 44 permet quant à lui au premier point d'ancrage 41 d'opérer un déplacement différentiel par rapport au second point d'ancrage 42, dans le référentiel du support 40.

Le premier point d'ancrage 41 entraîne la chaîne 21 à sa suite, ce qui permet de reconfigurer ladite chaîne 21, notamment en modifiant la distance qui sépare, au sein du support 40, le premier point d'ancrage 41 du second point d'ancrage 42, ainsi que, le cas échéant, la direction, ici l'inclinaison par rapport à la verticale, du segment de droite fictif qui relie le premier point d'ancrage 41 au second point d'ancrage 42.

Le premier point d'ancrage 41 peut être porté par un chariot 47 guidé sur le support 40, préférentiellement en translation, de préférence en translation rectiligne, par exemple au moyen d'un rail 49.

Ledit chariot 47 peut être entraîné par un organe d'entraînement tel qu'un vérin de réglage 48 qui permet d'ajuster la position dudit chariot 47 le long du rail 49, et donc d'ajuster la position du premier point d'ancrage 41 au sein du support 40.

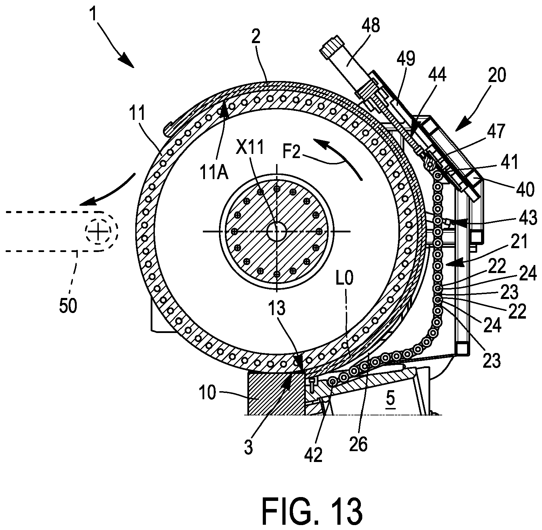

De préférence, il existe au moins une configuration du mécanisme de positionnement 43, et donc une configuration correspondante du support 40 par rapport au bâti 12, dite « configuration de travail », dans laquelle le mécanisme tendeur 44 permet, en déplaçant le premier point d'ancrage 41 par rapport au second point d'ancrage 42 au sein du support 40, de placer sélectivement la chaîne 21 soit dans une configuration d'engagement (figure 8), telle que mentionnée plus haut, ici de telle manière qu'au moins un rouleau auxiliaire 22 délimitant le chemin de guidage 26 vient se placer à une distance de la surface de réception 11A qui est strictement inférieure à l'épaisseur E2 nominale du profilé 2, de préférence à une distance nulle de sorte que ledit au moins rouleau auxiliaire 22 soit au contact de ladite surface de réception 11A, soit dans une configuration de dégagement (figures 7 et 13), dans laquelle la totalité de la chaîne 21 est placée en retrait de la surface de réception 11A, à une distance de la surface de réception 11A qui est strictement supérieure à l'épaisseur E2 nominale du profilé 2, de préférence supérieure à 1,5 fois l'épaisseur nominale E2 du profilé 2 et plus préférentiellement supérieure à 2 fois l'épaisseur nominale E2 du profilé 2, voire supérieure à 3 fois et par exemple égale ou supérieure à 5 fois l'épaisseur nominale E2 du profilé.

La configuration de travail du support 40 correspond de préférence à la configuration fermée dans laquelle le support 40 est rabattu au plus près du rouleau principal 11. Ici, cela correspond à une position rentrée des tiges des vérins de positionnement 46.

La configuration d'engagement de la chaîne 21 est celle qui permet à la chaîne 21 de se rapprocher de la surface de réception 11A afin de pouvoir engager le profilé 2 et de coopérer avec ce dernier pour le guider et le plaquer contre la surface de réception 11A, tandis que la configuration de dégagement permet d'éloigner la chaîne 21 de la surface de réception 11A et de placer ainsi ladite chaîne 21 suffisamment en retrait de ladite surface de réception 11A pour que l'on soit sûr que ladite chaîne 21 ne peut plus interférer avec le profilé 2, au moins lorsque ledit profilé repose contre, et est entraîné par, la surface de réception 11A.

La configuration de dégagement est mise en oeuvre de préférence préalablement à la configuration d'engagement, avant de commencer la production du profilé 2, afin de permettre la mise en place préalable du support 40 par rapport au bâti 12 (figure 7).

La configuration d'engagement intervient ensuite (figure 8), pour ajuster finement la position de la chaîne 21 pour la production du profilé 2, et cette configuration d'engagement est maintenue aussi longtemps qu'il est nécessaire de guider le profilé 2 vers et contre la surface de réception 11A, et notamment pendant la phase transitoire de démarrage de la production (figures 9, 11).

Il est possible de revenir ensuite en configuration de dégagement, et ainsi d'écarter de nouveau la chaîne 21 de la surface de réception 11A, sitôt que le profilé 2 n'a plus besoin d'assistance pour se maintenir convenablement contre la surface de réception 11A. Ce peut être le cas notamment lorsque la production du profilé 2 est terminée, ou bien encore, en cours de production, dès lors que l'on a atteint un régime établi, et dès lors que le profilé 2 présente une longueur d'engagement suffisante le long de la surface de réception 11A pour se maintenir seul sur ladite surface de réception 11A, par exemple dès lors que le profilé 2 adhère sur une portion du rouleau principal 11 supérieure à un demi-tour (soient sur au moins 180 degrés autour de l'axe principal X11), et par exemple sur une portion du rouleau principal 11 comprise entre un demi-tour (180 degrés) et trois-quarts de tour (270 degrés), tel que cela est illustré sur la figure 13.

On notera du reste que, après avoir parcouru une distance jugée suffisante sur la surface de réception 11A, le profilé 2 est décollé de ladite surface de réception 11A par un système de séparation idoine, afin de poursuivre sa progression, par exemple sur un tapis de convoyage aval 50 (figure 13), vers un poste de stockage ou un poste de transformation, par exemple un poste de coupe où l'on coupe ledit profilé 2 à la longueur voulue pour son utilisation dans la fabrication d'un produit, tel qu'un bandage pneumatique.

On remarquera que, avantageusement, le fait que le dispositif de guidage 20 à chaîne 21 selon l'invention permette au profilé 2 de conserver, le cas échéant, un bourrelet frontal, peut faciliter, grâce à la surépaisseur que procure ce bourrelet, la saisie et le pelage du profilé 2 par le système de séparation, en sortie de la surface de réception 11A, et par conséquent le transfert dudit profilé 2 jusqu'au tapis de convoyage aval 50.

Le retour de la chaîne 21 en configuration de dégagement permet notamment de relâcher l'emprise de ladite chaîne 21 sur le profilé 2, et donc d'autoriser le profilé 2 à circuler librement et continûment depuis la sortie de la filière 3, en étant entraîné par la surface de réception 11A.

On économise ainsi de l'énergie, puisque les rouleaux auxiliaires 22 ne sont plus entraînés et n'occasionnent donc plus de dissipation d'énergie lors de la progression du profilé 2. De même, on minimise ainsi les phénomènes d'usure au sein de la machine 1, et plus particulièrement au sein du dispositif de guidage 20 et de sa chaîne 21, et l'on évite en outre tout risque de marquer le profilé avec un rouleau auxiliaire 22 ou de causer un bourrage accidentel du profilé 2 contre un rouleau auxiliaire 22.

Ainsi, en définitive, la configuration d'engagement n'est de préférence utilisée que de manière temporaire, lorsqu'il est nécessaire que la chaîne 21 accompagne effectivement le profilé 2, typiquement au démarrage d'une production, ou lors de la reprise d'une production qui aura été ralentie ou arrêtée pour une raison quelconque, et/ou après un remplacement de l'outillage 10 ou de la filière 3.

Par ailleurs, quelle que soit la position du premier point d'ancrage 41 par rapport au second point d'ancrage 42, lorsque le support 40 se trouve en configuration de travail, et notamment lorsque la chaîne 21 se trouve en configuration d'engagement, la longueur de ladite chaîne 21 reste supérieure à la distance qui sépare le premier point d'ancrage 41 du second point d'ancrage 42, de sorte que ladite chaîne 21 conserve une certaine laxité, qui lui permet d'adapter sa forme et sa courbure aux exigences de passage du profilé 2.

De préférence, la surface de réception 11A présente, le long de la direction longitudinale L0, une portion convexe, et plus préférentiellement une portion convexe circulaire comme c'est le cas avec le cylindre principal 11.

Avantageusement, la courbure convexe de la surface de réception 11A favorisera la convergence de la chaîne 21 vers ladite surface de réception 11A, ainsi que, le cas échéant, une entrée en contact de ladite chaîne 21 avec ladite surface de réception 11A selon une direction qui sera sensiblement tangente à ladite surface de réception 11A, dans la direction longitudinale L0.

Lorsque la surface de réception 11A présente une telle portion convexe, alors le dispositif de guidage 20 est préférentiellement agencé de manière à pouvoir conformer la chaîne 21 en creux, selon un contour concave, en vis-à-vis de ladite portion convexe de la surface de réception 11A.

Ceci vaut en particulier en configuration d'engagement.

La chaîne 21 peut ainsi adopter une forme sensiblement conjuguée à celle de la surface de réception 11A, en présentant, au moins localement, et ici en projection dans un plan de référence qui est normal aux axes d'articulation X24, normal à l'axe principal X11, et le cas échéant normal aux axes de rotation X22 des rouleaux auxiliaires, une courbure qui est de même signe que la courbure de la surface de réception 11A.

La chaîne 21 peut ainsi venir en quelque sorte coiffer la surface de réception 11A, par un abord tangentiel, en épousant sensiblement la forme de ladite surface de réception 11A.

Ceci facilite le guidage et le maintien du profilé 2 contre la surface de réception 11A.

A titre indicatif, on pourra prévoir que, en configuration d'engagement, la portion incurvée de la chaîne 21 qui suit la surface de réception du rouleau principal 11 à une distance égale ou inférieure à l'épaisseur E2 nominale du profilé 2, de sorte que ladite portion de chaîne correspond à la zone d'étranglement 31 mentionnée plus haut, occupe un secteur angulaire, en azimut autour de l'axe principal X11, qui est supérieur à 20 degrés, de préférence supérieur à 30 degrés, voire supérieur à 60 degrés, et par exemple compris entre 30 degrés et 120 degrés ou de préférence compris entre 45 degrés et 90 degrés, tel que cela est par exemple le cas sur les figures 8 et 11. Comme indiqué plus haut, l'étendue de la zone d'étranglement 31 pourra dépendre du collant du profilé 2, et par exemple être comprise entre 20 degrés et 120 degrés, voire entre 20 degrés et 90 degrés, ou même entre 20 degrés et 60 degrés pour un profilé 2 très collant, et au contraire dépasser 180 degrés, voire atteindre ou même dépasser 270 degrés, pour accompagner un profilé 2 très peu collant.

De préférence, le premier point d'ancrage 41 et le second point d'ancrage 42 sont disposés l'un par rapport à l'autre de telle manière que la chaîne 21 comprise entre le premier point d'ancrage 41 et le second point d'ancrage 42 tend naturellement à s'incurver, sous l'effet de la gravité, selon une courbure qui est de même signe que la courbure de la portion convexe de la surface de réception 11A.

On pourra de la sorte définir de manière reproductible et simple un chemin de guidage 26 dont on est sûr qu'il est délimité, de part et d'autre de la direction longitudinale L0, d'une part par un bord convexe, formé ici par la surface de réception 11A, et d'autre part par un bord concave sensiblement conjugué, formé ici par la chaîne 21, et plus particulièrement par les rouleaux auxiliaires 22 portés par les maillons 23 qui se positionnent, grâce à leurs articulations 24, de sorte à adopter ladite courbure concave.

Avantageusement, la gravité peut en outre servir à réguler la tension de la chaîne 21, et donc la légère pression de contact, sensiblement radiale, que ladite chaîne 21 exerce sur le profilé 2 pour maintenir ce dernier contre la surface de réception 11A.

Dans l'absolu, on pourrait envisager de placer la chaîne 21 sensiblement à l'horizontale, de préférence sous le cylindre principal 11, de sorte à ce que ladite chaîne 21 forme une sorte de hamac suspendu, dont la gravité règlerait, en fonction de la distance séparant les premier et second points d'ancrage 41, 42, la profondeur du creux, situé verticalement sous l'axe principal X11.

Toutefois, selon une possibilité préférentielle d'agencement, qui permet de combiner plusieurs caractéristiques et avantages décrits ci-dessus, et qui correspond à celle représentée sur les figures 1 à 13, l'axe principal X11 du rouleau principal 11 est horizontal, et le second point d'ancrage 42 est agencé pour venir se placer à une altitude inférieure à l'altitude dudit axe principal X11.

Le premier point d'ancrage 41 est alors situé verticalement à une altitude strictement supérieure à l'altitude du second point d'ancrage 42 et supérieure à l'altitude de l'axe principal X11, et horizontalement dans une position qui est décalée (ici vers la droite sur les figures 2 et 6 à 13) par rapport à une ligne verticale fictive passant par le second point d'ancrage 42, dans une direction perpendiculaire à l'axe principal X11 du rouleau principal et dirigée vers l'extérieur du rouleau principal 11 par rapport audit axe principal X11, de sorte que la chaîne 21, suspendue au premier point d'ancrage 41 et retenue par le second point d'ancrage 42, tend naturellement à s'incurver sous l'effet de la gravité selon une courbure qui est de même signe que la courbure du rouleau principal 11.

En d'autres termes, on peut avantageusement disposer les points d'ancrage 41, 42 de sorte que la chaîne 21 pende sensiblement verticalement, d'un côté du rouleau principal 11, et tende à "tomber" naturellement de ce même côté du rouleau principal, en fléchissant dans le même sens que la surface de réception 11A, si bien que ladite chaîne 21 se conforme d'elle-même pour venir s'appuyer tangentiellement contre la surface de réception 11A dudit rouleau principal 11 par abord latéral.

De préférence, pour faire passer la chaîne 21 de sa configuration de dégagement (figure 7) à sa configuration d'engagement (figure 8), on déplace le premier point d'ancrage 41 de manière à rapprocher ledit point d'ancrage 41 de la verticale de l'axe principal X11, de sorte que la gravité contribue naturellement à plaquer la chaîne 21 contre la surface de réception 11A.

De préférence, le rail 49 qui guide le chariot 47 sur le support 40, la tige du vérin de réglage 48, et en tout état de cause la trajectoire selon laquelle on peut modifier la position du premier point d'ancrage 41, peuvent de préférence être orientés, au moins lorsque le support 40 se trouve dans la configuration de travail, selon une direction qui est sensiblement parallèle à une tangente à la surface de réception 11A, ici de préférence une direction qui est sensiblement ortho-radiale par rapport à l'axe principal X11, c'est-à-dire une direction sensiblement perpendiculaire à un rayon provenant de l'axe principal X11.

En particulier, le rail 49 guidant le chariot 47 et la tige du vérin de réglage 48 peuvent ainsi être inclinés par rapport à l'horizontale, pour former une rampe, en l'occurrence une rampe descendante qui penche du côté du rouleau principal 11 où s'étend la chaîne 21, ici vers la droite sur les figures 2, 7, 8, 9, 11 et 14.

Ainsi, en rentrant la tige du vérin de réglage 48, on fait monter le premier point d'ancrage 41 (en éloignement du second point d'ancrage 42 qui reste ici à une altitude fixe) et simultanément on rapproche ledit premier point d'ancrage 41 de la verticale de l'axe principal X11, et de la verticale du second point d'ancrage 42, fixe, ce qui a pour effet de tendre légèrement la chaîne 21, afin de redresser ladite chaîne 21 (i.e. d'augmenter son rayon de courbure), et de rapprocher ladite chaîne 21 de la surface de réception 11A, jusqu'à, de préférence, amener les rouleaux auxiliaires 22 de ladite chaîne au contact de la surface de réception 11A, tel que cela est illustré sur la figure 8.

A l'inverse, en sortant la tige du vérin de réglage 48, on fait redescendre le premier point d'ancrage 41, en rapprochement du second point d'ancrage 42, et on éloigne ledit premier point d'ancrage 41 de la verticale de l'axe principal X11 et de la verticale du second point d'ancrage 42, ce qui a pour effet que la chaîne 21 se relâche et que sa courbure se creuse, et que ladite chaîne 21 s'éloigne globalement de la surface de réception 11A, comme cela est illustré sur les figures 7 et 13.

Le dispositif de guidage 20, agencé selon l'une quelconque des variantes décrites plus haut, permet de rabattre un profilé 2, ou plus généralement un produit allongé se présentant sous forme d'une bande continue, vers une surface de réception 11A, de préférence cylindrique, et de plaquer ledit profilé 2 contre ladite surface de réception 11A.

Bien entendu, l'invention n'est nullement limitée aux seules variantes de réalisation décrites dans ce qui précède, l'étendue de la protection conférée étant déterminée par les revendications .

## Revendications

1. Machine (1) d'extrusion comprenant une filière (3) pour générer un profilé (2) à partir d'un ou plusieurs matériaux extrudés, de sorte que ledit profilé (2) s'étend en longueur selon une direction dite « direction longitudinale » (L0), ladite machine d'extrusion (2) comprenant en outre un organe de réception (11), tel qu'un rouleau principal refroidisseur, qui possède une surface de réception (11A) destinée à recevoir le profilé (2) qui sort de la filière (3) et à permettre audit profilé (2) d'avancer selon la direction longitudinale (L0), ladite machine d'extrusion étant **caractérisée en ce qu'**elle comprend un dispositif de guidage (20) qui comporte une chaîne (21) articulée à rouleaux auxiliaires (22) comprenant une pluralité de maillons (23) qui sont pourvus de rouleaux auxiliaires (22) montés rotatifs et qui sont connectés deux à deux par des articulations (24) permettant un libre basculement desdits maillons (23) les uns par rapport aux autres, et **en ce que** le dispositif de guidage (20) est agencé pour pouvoir placer ladite chaîne (21) en vis-à-vis de la surface de réception (11A), en aval de la filière (3) selon la direction longitudinale (L0), dans une configuration dite « configuration d'engagement » selon laquelle au moins une partie des rouleaux auxiliaires (22) portés par des maillons (23) successifs de ladite chaîne (21) délimitent, avec la surface de réception (11A), un chemin de guidage (26) qui s'étend selon la direction longitudinale (L0) de manière à ce que le profilé (2) puisse s'engager et progresser dans ledit chemin de guidage (26), entre lesdits rouleaux auxiliaires (22) et la surface de réception (11A), et que lesdits rouleaux auxiliaires (22) puissent plaquer ledit profilé (2) contre la surface de réception (11A).

2. Machine selon la revendication 1 **caractérisée en ce que**, en configuration d'engagement, la plus petite distance qui sépare, avant le passage du profilé (2), la surface de réception (11A) du ou des rouleaux auxiliaires (22) de la chaîne (21) qui sont les plus proches de ladite surface de réception (11A) est strictement inférieure à une épaisseur (E2) voulue prédéterminée du profilé (2), dite « épaisseur nominale », et **en ce que** la flexibilité de la chaîne (21) procurée par les articulations (24) des maillons (23) permet auxdits rouleaux auxiliaires (22) de s'écarter de la surface de réception (11A) lors du passage du profilé (2) afin d'accommoder l'épaisseur (E2) effective dudit profilé.

3. Machine selon la revendication 1 ou 2 **caractérisée en ce que**, en configuration d'engagement, la chaîne (21) forme un agencement convergent avec la surface de réception (11A), de sorte que le chemin de guidage (26) va en se rétrécissant d'amont en aval le long de la direction longitudinale (L0), depuis une zone d'admission (30) qui accueille le profilé (2) jusqu'à une zone d'étranglement (31) qui est plus étroite que la zone d'admission (30) et apte à rabattre le profilé (2) vers et contre la surface de réception (11A).

4. Machine selon la revendication 3 **caractérisée en ce que**, dans la zone d'admission (30), le chemin de guidage (26) présente, dans le sens de l'épaisseur (E2) du profilé, une première hauteur d'ouverture, dite « hauteur d'avalement » (H26_30), qui est égale ou supérieure à 1,5 fois une épaisseur (E2) voulue prédéterminée du profilé (2) dite « épaisseur nominale », de préférence comprise entre 1,5 fois et 5 fois l'épaisseur nominale du profilé, et plus préférentiellement comprise entre 1,5 fois et 3 fois l'épaisseur nominale du profilé, par exemple comprise entre 2 fois et 2,5 fois l'épaisseur nominale du profilé, tandis que, dans la zone d'étranglement (31), située en aval de la zone d'admission (30), le chemin de guidage (26) présente, au moins avant que le profilé (2) ne s'engage à travers ladite zone d'étranglement (31), une seconde hauteur d'ouverture, dite « hauteur d'étranglement » (H26_31), qui est égale ou inférieure à 1 fois l'épaisseur (E2) nominale du profilé (2), de préférence inférieure ou égale à 0,5 fois l'épaisseur nominale du profilé, voire même nulle de sorte que le ou les rouleaux auxiliaires (22) du ou des maillons (23) correspondants sont initialement au contact de la surface de réception (11A).

5. Machine selon l'une des revendications précédentes **caractérisée en ce qu'**elle comprend un bâti (12) portant l'organe de réception (11), **en ce que** le dispositif de guidage (20) comprend un support (40) qui vient en prise sur ledit bâti (12) et qui porte la chaîne (21) au moyen d'un premier point d'ancrage (41) et d'un second point d'ancrage (42), et **en ce que** la longueur de la chaîne (21) comprise entre le premier point d'ancrage (41) et le second point d'ancrage (42) est strictement supérieure à la distance qui sépare le premier point d'ancrage (41) du second point d'ancrage (42).

6. Machine selon l'une des revendications précédentes **caractérisée en ce qu'**elle comprend un bâti (12) portant l'organe de réception (11), **en ce que** le dispositif de guidage (20) comprend un support (40) qui vient en prise sur ledit bâti (12) et qui porte la chaîne (21) au moyen d'un premier point d'ancrage (41) et d'un second point d'ancrage (42), et **en ce que** le dispositif de guidage (20) comprend d'une part un mécanisme de positionnement (43) permettant d'ajuster la position du support (40) par rapport au bâti (12), et donc d'ajuster de façon simultanée les positions respectives du premier point d'ancrage (41) et du second point d'ancrage (42) dans leur ensemble par rapport audit bâti (12) et par rapport à l'organe de réception (11), et d'autre part un mécanisme tendeur (44) qui est embarqué sur le support (40) et qui permet de déplacer sélectivement le premier point d'ancrage (41) par rapport au second point d'ancrage (42) au sein dudit support (40), de sorte à modifier la forme du tracé de la chaîne (21) en vis-à-vis de la surface de réception (11A).

7. Machine selon la revendication 6 **caractérisée en ce qu'**il existe au moins une configuration du mécanisme de positionnement (43), et donc une configuration correspondante du support (40) par rapport au bâti 12, dite « configuration de travail », dans laquelle le mécanisme tendeur (44) permet, en déplaçant le premier point d'ancrage (41) par rapport au second point d'ancrage (42) au sein du support (40), de placer sélectivement la chaîne (21) soit dans la configuration d'engagement de telle manière qu'au moins un rouleau auxiliaire (22) délimitant le chemin de guidage (26) vient se placer à une distance de la surface de réception (11A) qui est strictement inférieure à l'épaisseur (E2) nominale du profilé (2), de préférence à une distance nulle de sorte que ledit au moins rouleau auxiliaire (22) soit au contact de ladite surface de réception (11A), soit dans une configuration de dégagement, dans laquelle la totalité de la chaîne (21) est placée en retrait de la surface de réception (11A), à une distance de la surface de réception (11A) qui est strictement supérieure à l'épaisseur (E2) nominale du profilé, de préférence supérieure à 1,5 fois et plus préférentiellement supérieure à 2 fois, l'épaisseur nominale du profilé, voire supérieure à 3 fois et par exemple égale ou supérieure à 5 fois l'épaisseur nominale du profilé.

8. Machine selon l'une des revendications précédentes **caractérisée en ce que** la surface de réception (11A) présente, le long de la direction longitudinale (L0), une portion convexe, de préférence circulaire, et **en ce que** le dispositif de guidage (20) est agencé de manière à pouvoir conformer la chaîne (21) en creux, selon un contour concave, en vis-à-vis de ladite portion convexe de la surface de réception (11A).

9. Machine selon la revendication 8 et l'une des revendications 5 à 7 **caractérisée en ce que** le premier point d'ancrage (41) et le second point d'ancrage (42) sont disposés l'un par rapport à l'autre de telle manière que la chaîne (21) comprise entre le premier point d'ancrage (41) et le second point d'ancrage (42) tend naturellement à s'incurver, sous l'effet de la gravité, selon une courbure qui est de même signe que la courbure de la portion convexe de la surface de réception (11A).

10. Machine selon l'une des revendications précédentes **caractérisée en ce que** l'organe de réception (11) est formé par un rouleau principal (11) qui est centré sur un axe principal (X11) autour duquel ledit rouleau principal (11) est monté en rotation.

11. Machine selon la revendication 10 **caractérisée en ce que** le rouleau principal (11) forme, avec la filière (3), un entrefer (13) qui définit l'épaisseur (E2) du profilé (2).

12. Machine selon la revendications 9 et l'une des revendications 10 et 11 **caractérisée en ce que** l'axe principal (X11) du rouleau principal (11) est horizontal, **en ce que** le second point d'ancrage (42) est agencé pour venir se placer à une altitude inférieure à l'altitude dudit axe principal (X11), et **en ce que** le premier point d'ancrage (41) est situé verticalement à une altitude strictement supérieure à l'altitude du second point d'ancrage (42) et supérieure à l'altitude de l'axe principal (X11), et horizontalement dans une position qui est décalée par rapport à une ligne verticale fictive passant par le second point d'ancrage (42), dans une direction perpendiculaire à l'axe principal (X11) du rouleau principal et dirigée vers l'extérieur du rouleau principal (11) par rapport audit axe principal (X11), de sorte que la chaîne (21), suspendue au premier point d'ancrage (41) et retenue par le second point d'ancrage (42), tend naturellement à s'incurver sous l'effet de la gravité selon une courbure qui est de même signe que la courbure du rouleau principal (11).

13. Machine selon l'une des revendications précédentes **caractérisée en ce que** au moins une partie, et de préférence la totalité, des rouleaux auxiliaires (22) de la chaîne (21) présentent des axes de rotation (X22) parallèles entre eux et parallèles à la surface de réception (11A), et de préférence perpendiculaires à la direction longitudinale (L0).

14. Machine selon l'une des revendications précédentes **caractérisée en ce que** les axes de rotation (X22) des rouleaux auxiliaires (22) de la chaîne (21) coïncident avec les axes de basculement (X24) des articulations (24) des maillons (23).

15. Machine selon la revendication 13 ou 14 et l'une des revendications 10 à 12 **caractérisée en ce que** les axes de rotation (X22) des rouleaux auxiliaires (22) de la chaîne (21) sont parallèles à l'axe principal (X11) du rouleau principal (11).

## Patentansprüche

1. Extrusionsmaschine (1), die eine Düse (3) beinhaltet, um aus einem oder mehreren extrudierten Materialien ein Profil (2) zu erzeugen, sodass sich das Profil (2) längs gemäß einer als "Längsrichtung" (L0) bezeichneten Richtung erstreckt, wobei die Extrusionsmaschine (2) ferner ein Aufnahmeorgan (11), wie etwa eine Hauptkühlrolle, beinhaltet, das eine Aufnahmefläche (11A) besitzt, die dazu bestimmt ist, das Profil (2), das aus der Düse (3) austritt, aufzunehmen und dem Profil (2) zu gestatten, gemäß der Längsrichtung (L0) vorzurücken, wobei die Extrusionsmaschine **dadurch gekennzeichnet ist, dass** sie eine Führungsvorrichtung (20) beinhaltet, die eine Gelenkkette (21) mit Hilfsrollen (22) umfasst, die eine Vielzahl von Gliedern (23) beinhaltet, die über drehbar gelagerte Hilfsrollen (22) verfügen und paarweise durch Gelenke (24) verbunden sind, die ein freies Schwenken der Glieder (23) in Bezug aufeinander gestatten, und dass die Führungsvorrichtung (20) dazu angeordnet ist, die Kette (21), gemäß der Längsrichtung (L0) stromabwärts der Düse (3), gegenüber der Aufnahmefläche (11A) in einer als "Eingriffskonfiguration" bezeichneten Konfiguration platzieren zu können, in der mindestens ein Teil der Hilfsrollen (22), die durch aufeinanderfolgende Glieder (23) der Kette (21) getragen werden, zusammen mit der Aufnahmefläche (11A) einen Führungsweg (26) begrenzen, der sich gemäß der Längsrichtung (L0) erstreckt, sodass das Profil (2) mit dem Führungsweg (26) in Eingriff kommen und sich darin zwischen den Hilfsrollen (22) und der Aufnahmefläche (11A) fortbewegen kann und sodass die Hilfsrollen (22) das Profil (2) gegen die Aufnahmefläche (11A) drücken können.

2. Maschine nach Anspruch 1, **dadurch gekennzeichnet, dass** in der Eingriffskonfiguration der kleinste Abstand, der vor dem Durchgang des Profils (2) die Aufnahmefläche (11A) von der einen oder den mehreren Hilfsrollen (22) der Kette (21), die der Aufnahmefläche (11A) am nächsten sind, trennt, strikt kleiner als eine vorbestimmte gewünschte Dicke (E2) des Profils (2), als "Nenndicke" bezeichnet, ist und dass die Biegsamkeit der Kette (21), die durch die Gelenke (24) der Glieder (23) bereitgestellt wird, den Hilfsrollen (22) gestattet, sich während des Durchgangs des Profils (2) von der Aufnahmefläche (11A) wegzubewegen, um die effektive Dicke (E2) des Profils unterzubringen.

3. Maschine nach Anspruch 1 oder 2, **dadurch gekennzeichnet, dass** in der Eingriffskonfiguration die Kette (21) mit der Aufnahmefläche (11A) eine konvergierende Anordnung bildet, sodass sich der Führungsweg (26) entlang der Längsrichtung (L0) von stromaufwärts nach stromabwärts von einem Einlassbereich (30), der das Profil (2) empfängt, bis zu einem Einschnürungsbereich (31), der schmaler als der Einlassbereich (30) ist und dazu fähig ist, das Profil (2) hin zu und gegen die Aufnahmefläche (11A) zu lenken, verjüngt.

4. Maschine nach Anspruch 3, **dadurch gekennzeichnet, dass** der Führungsweg (26) in dem Einlassbereich (30) in der Richtung der Dicke (E2) des Profils eine erste Öffnungshöhe, als "Einzugshöhe" (H26_30) bezeichnet, aufweist, die gleich oder größer als das 1,5-fache einer vorbestimmten gewünschten Dicke (E2) des Profils (2), als "Nenndicke" bezeichnet, ist, vorzugsweise zwischen dem 1,5-fachen und dem 5-fachen der Nenndicke des Profils beträgt und noch bevorzugter zwischen dem 1,5-fachen und dem 3-fachen der Nenndicke des Profils beträgt, beispielsweise zwischen dem 2-fachen und dem 2,5-fachen der Nenndicke des Profils beträgt, während in dem Einschnürungsbereich (31), der sich stromabwärts des Einlassbereichs (30) befindet, der Führungsweg (26), mindestens bevor das Profil (2) in den Einschnürungsbereich (31) eingreift, eine zweite Öffnungshöhe, als "Einschnürungshöhe" (H26_31) bezeichnet, aufweist, die gleich oder kleiner als das 1-fache der Nenndicke (E2) des Profils (2) ist, vorzugsweise kleiner als oder gleich dem 0,5-fachen der Nenndicke des Profils ist oder sogar Null ist, sodass die eine oder die mehreren Hilfsrollen (22) des oder der entsprechenden Glieder (23) anfangs mit der Aufnahmefläche (11A) in Kontakt sind.

5. Maschine nach einem der vorhergehenden Ansprüche, **dadurch gekennzeichnet, dass** sie einen Rahmen (12) beinhaltet, der das Aufnahmeorgan (11) trägt, dass die Führungsvorrichtung (20) einen Träger (40) beinhaltet, der an dem Rahmen (12) angebracht ist und die Kette (21) mittels eines ersten Verankerungspunktes (41) und eines zweiten Verankerungspunktes (42) trägt, und dass die Länge der Kette (21) zwischen dem ersten Verankerungspunkt (41) und dem zweiten Verankerungspunkt (42) strikt größer als der Abstand ist, der den ersten Verankerungspunkt (41) von dem zweiten Verankerungspunkt (42) trennt.

6. Maschine nach einem der vorhergehenden Ansprüche, **dadurch gekennzeichnet, dass** sie einen Rahmen (12) beinhaltet, der das Aufnahmeorgan (11) trägt, dass die Führungsvorrichtung (20) einen Träger (40) beinhaltet, der an dem Rahmen (12) angebracht ist und die Kette (21) mittels eines ersten Verankerungspunktes (41) und eines zweiten Verankerungspunktes (42) trägt, und dass die Führungsvorrichtung (20) einerseits einen Positionierungsmechanismus (43), der es gestattet, die Position des Trägers (40) mit Bezug auf den Rahmen (12) einzustellen und somit die jeweiligen Positionen des ersten Verankerungspunktes (41) und des zweiten Verankerungspunktes (42) gemeinsam mit Bezug auf den Rahmen (12) und mit Bezug auf das Aufnahmeorgan (11) gleichzeitig einzustellen, und andererseits einen Spannmechanismus (44), der in den Träger (40) integriert ist und es gestattet, den ersten Verankerungspunkt (41) mit Bezug auf den zweiten Verankerungspunkt (42) innerhalb des Trägers (40) selektiv zu verschieben, um die Form des Pfades der Kette (21) gegenüber der Aufnahmefläche (11A) zu verändern, beinhaltet.

7. Maschine nach Anspruch 6, **dadurch gekennzeichnet, dass** es mindestens eine Konfiguration des Positionierungsmechanismus (43) und somit eine entsprechende Konfiguration des Trägers (40) mit Bezug auf den Rahmen 12, als "Arbeitskonfiguration" bezeichnet, gibt, in der der Spannmechanismus (44) es gestattet, durch ein Verschieben des ersten Verankerungspunktes (41) mit Bezug auf den zweiten Verankerungspunkt (42) innerhalb des Trägers (40) die Kette (21) selektiv entweder in der Eingriffskonfiguration zu platzieren, sodass mindestens eine Hilfsrolle (22), die den Führungsweg (26) begrenzt, in einem Abstand von der Aufnahmefläche (11A), der strikt kleiner als die Nenndicke (E2) des Profils (2) ist, vorzugsweise in einem Abstand Null, sodass die mindestens eine Hilfsrolle (22) mit der Aufnahmefläche (11A) in Kontakt ist, zu liegen kommt, oder in einer Distanzkonfiguration zu platzieren, in der die gesamte Kette (21) von der Aufnahmefläche (11A) weg platziert ist, in einem Abstand von der Aufnahmefläche (11A), der strikt größer als die Nenndicke (E2) des Profils ist, vorzugsweise größer als das 1,5-fache und noch bevorzugter größer als das 2-fache der Nenndicke des Profils ist oder sogar größer als das 3-fache und beispielsweise gleich oder größer als das 5-fache der Nenndicke des Profils ist.

8. Maschine nach einem der vorhergehenden Ansprüche, **dadurch gekennzeichnet, dass** die Aufnahmefläche (11A) entlang der Längsrichtung (L0) einen konvexen, vorzugsweise kreisförmigen, Abschnitt aufweist und dass die Führungsvorrichtung (20) so angeordnet ist, dass sie die Kette (21) gegenüber dem konvexen Abschnitt der Aufnahmefläche (11A) gemäß einer konkaven Kontur muldenförmig anpassen kann.

9. Maschine nach Anspruch 8 und einem der Ansprüche 5 bis 7, **dadurch gekennzeichnet, dass** der erste Verankerungspunkt (41) und der zweite Verankerungspunkt (42) in Bezug aufeinander so angeordnet sind, dass die Kette (21) zwischen dem ersten Verankerungspunkt (41) und dem zweiten Verankerungspunkt (42) auf natürliche Weise dazu tendiert, sich unter dem Einfluss der Schwerkraft gemäß einer Krümmung, die dasselbe Vorzeichen wie die Krümmung des konvexen Abschnitts der Aufnahmefläche (11A) hat, zu krümmen.

10. Maschine nach einem der vorhergehenden Ansprüche, **dadurch gekennzeichnet, dass** das Aufnahmeorgan (11) durch eine Hauptrolle (11) gebildet wird, die auf eine Hauptachse (X11) zentriert ist, um die die Hauptrolle (11) drehbar gelagert ist.

11. Maschine nach Anspruch 10, **dadurch gekennzeichnet, dass** die Hauptrolle (11) mit der Düse (3) einen Spalt (13) bildet, die die Dicke (E2) des Profils (2) definiert.

12. Maschine nach Anspruch 9 und einem der Ansprüche 10 und 11, **dadurch gekennzeichnet, dass** die Hauptachse (X11) der Hauptrolle (11) horizontal ist, dass der zweite Verankerungspunkt (42) dazu angeordnet ist, auf einer Höhe zu liegen zu kommen, die kleiner als die Höhe der Hauptachse (X11) ist, und dass sich der erste Verankerungspunkt (41) vertikal auf einer Höhe befindet, die strikt größer als die Höhe des zweiten Verankerungspunktes (42) und größer als die Höhe der Hauptachse (X11) ist, und horizontal in einer Position befindet, die mit Bezug auf eine fiktive vertikale Linie, die durch den zweiten Verankerungspunkt (42) verläuft, in einer zu der Hauptachse (X11) der Hauptrolle senkrechten und mit Bezug auf die Hauptachse (X11) zu der Außenseite der Hauptrolle (11) gerichteten Richtung verschoben ist, sodass die Kette (21), die an dem ersten Verankerungspunkt (41) aufgehängt ist und durch den zweiten Verankerungspunkt (42) zurückgehalten wird, auf natürliche Weise dazu tendiert, sich unter dem Einfluss der Schwerkraft gemäß einer Krümmung, die dasselbe Vorzeichen wie die Krümmung der Hauptrolle (11) hat, zu krümmen.

13. Maschine nach einem der vorhergehenden Ansprüche, **dadurch gekennzeichnet, dass** mindestens ein Teil, und vorzugsweise die Gesamtheit, der Hilfsrollen (22) der Kette (21) Drehachsen (X22) aufweist, die untereinander parallel und zu der Aufnahmefläche (11A) parallel sind und vorzugsweise zu der Längsrichtung (L0) senkrecht sind.

14. Maschine nach einem der vorhergehenden Ansprüche, **dadurch gekennzeichnet, dass** die Drehachsen (X22) der Hilfsrollen (22) der Kette (21) mit den Schwenkachsen (X24) der Gelenke (24) der Glieder (23) zusammenfallen.

15. Maschine nach Anspruch 13 oder 14 und einem der Ansprüche 10 bis 12, **dadurch gekennzeichnet, dass** die Drehachsen (X22) der Hilfsrollen (22) der Kette (21) zu der Hauptachse (X11) der Hauptrolle (11) parallel sind.

## Claims

1. Extrusion machine (1) comprising a die (3) for generating a profiled element (2) from one or more extruded materials such that said profiled element (2) extends lengthwise in a direction referred to as "longitudinal direction" (L0), said extrusion machine (2) further comprising a receiving member (11), such as a main cooling roller, which has a receiving surface (11A) intended to receive the profiled element (2) leaving the die (3) and to allow said profiled element (2) to advance in the longitudinal direction (L0), said extrusion machine being **characterized in that** it comprises a guide device (20) which comprises an articulated chain (21) with auxiliary rollers (22) comprising a plurality of links (23) which are provided with auxiliary rollers (22) mounted with the ability to rotate and which are connected in pairs by articulations (24) allowing said links (23) to pivot freely relative to one another, and **in that** the guide device (20) is arranged in such a way as to be able to position said chain (21) facing the receiving surface (11A) downstream of the die (3) in the longitudinal direction (L0) in a configuration referred to as "engagement configuration" in which at least some of the auxiliary rollers (22) borne by successive links (23) of said chain (21) delimit, with the receiving surface (11A), a guideway (26), which extends in the longitudinal direction (L0) so that the profiled element (2) can enter and progress along said guideway (26), between said auxiliary rollers (22) and the receiving surface (11A), and so that said auxiliary rollers (22) can press said profiled element (2) against the receiving surface (11A).

2. Machine according to Claim 1, **characterized in that**, in the engagement configuration, the shortest distance which, before the profiled element (2) passes through, separates the receiving surface (11A) from that auxiliary roller (22) of the chain (21) that is closest to said receiving surface (11A), or from those auxiliary rollers (22) of the chain (21) that are closest to said receiving surface (11A), is strictly less than a predetermined desired thickness (E2) for the profiled element (2), referred to as "nominal thickness", and **in that** the flexibility of the chain (21) afforded by the articulations (24) of the links (23) allows said auxiliary rollers (22) to move away from the receiving surface (11A) as the profiled element (2) passes through, so as to accommodate the effective thickness (E2) of said profiled element.

3. Machine according to Claim 1 or 2, **characterized in that**, in the engagement configuration, the chain (21) forms a converging arrangement with the receiving surface (11A), so that the guideway (26) narrows from upstream to downstream in the longitudinal direction (L0), from an entry zone (30) that accepts the profiled element (2) as far as a constriction zone (31) which is narrower than the entry zone (30) and able to direct the profiled element (2) towards and against the receiving surface (11A) .

4. Machine according to Claim 3, **characterized in that**, in the entry zone (30), the guideway (26) has, in the direction of the thickness (E2) of the profiled element, a first opening height referred to as "intake height" (H26_30), which is equal to or greater than 1.5 times a predetermined desired thickness (E2) of the profiled element (2), referred to as "nominal thickness", preferably comprised between 1.5 times and 5 times the nominal thickness of the profiled element, and more preferentially comprised between 1.5 times and 3 times the nominal thickness of the profiled element, for example comprised between 2 times and 2.5 times the nominal thickness of the profiled element, whereas, in the constriction zone (31) situated downstream of the entry zone (30), the guideway (26) has, at least before the profiled element (2) has fed into said constriction zone (31), a second opening height, referred to as "constriction height" (H26_31), which is equal to or less than 1 times the nominal thickness (E2) of the profiled element (2), preferably less than or equal to 0.5 times the nominal thickness of the profiled element, or even zero so that the auxiliary roller(s) (22) of the corresponding link(s) (23) are initially in contact with the receiving surface (11A).

5. Machine according to one of the preceding claims, **characterized in that** it comprises a framework (12) bearing the receiving member (11), **in that** the guide device (20) comprises a support (40) which engages on said framework (12) and which bears the chain (21) by means of a first anchor point (41) and of a second anchor point (42), and **in that** the length of the chain (21) comprised between the first anchor point (41) and the second anchor point (42) is strictly greater than the distance separating the first anchor point (41) from the second anchor point (42).

6. Machine according to one of the preceding claims, **characterized in that** it comprises a framework (12) bearing the receiving member (11), **in that** the guide device (20) comprises a support (40) which engages on said framework (12) and which bears the chain (21) by means of a first anchor point (41) and of a second anchor point (42), and **in that** the guide device (20) comprises, on the one hand, a positioning mechanism (43) for adjusting the position of the support (40) with respect to the framework (12) and therefore simultaneously adjusting the respective positions of the first anchor point (41) and of the second anchor point (42) collectively with respect to said framework (12) and with respect to the receiving member (11) and, on the other hand, a tensioning mechanism (44) which is carried on board the support (40) and enables the first anchor point (41) to be moved selectively with respect to the second anchor point (42) within said support (40) so as to modify the shape of the path followed by the chain (21) facing the receiving surface (11A).

7. Machine according to Claim 6, **characterized in that** there is at least one configuration of the positioning mechanism (43), and therefore a corresponding configuration of the support (40) with respect to the framework 12 and referred to as "working configuration" in which the tensioning mechanism (44) is able, by moving the first anchor point (41) with respect to the second anchor point (42) within the support (40) to selectively place the chain (21) either in the engagement configuration in such a way that at least one auxiliary roller (22) delimiting the guideway (26) is positioned at a distance away from the receiving surface (11A) that is strictly less than the nominal thickness (E2) of the profiled element (2), preferably at a distance that is zero so that said at least one auxiliary roller (22) is in contact with said receiving surface (11A), or in a disengagement configuration in which the entirety of the chain (21) is set back away from the receiving surface (11A) at a distance from the receiving surface (11A) that is strictly greater than the nominal thickness (E2) of the profiled element, preferably greater the 1.5 times and more preferentially greater than 2 times the nominal thickness of the profiled element, or even greater than 3 times and for example equal to or greater than 5 times the nominal thickness of the profiled element.

8. Machine according to one of the preceding claims, **characterized in that** the receiving surface (11A) exhibits, along the longitudinal direction (L0), a convex, preferably circular, portion, and **in that** the guide device (20) is arranged in such a way as to be able to shape the chain (21) into a hollow, with a concave contour, facing said convex portion of the receiving surface (11A).

9. Machine according to Claim 8 and one of Claims 5 to 7, **characterized in that** the first anchor point (41) and the second anchor point (42) are positioned with respect to one another in such a way that the chain (21) comprised between the first anchor point (41) and the second anchor point (42) has a natural tendency to adopt a curved shape, under the effect of gravity, with a curvature that is of the same sign as the curvature of the convex portion of the receiving surface (11A).

10. Machine according to one of the preceding claims, **characterized in that** the receiving member (11) is formed by a main roller (11) which is centred on a main axis (X11) about which said main roller (11) is rotatably mounted.

11. Machine according to Claim 10, **characterized in that** the main roller (11) forms, with the die (3), a gap (13) which determines the thickness (E2) of the profiled element (2).

12. Machine according to Claim 9 and one of Claims 10 and 11, **characterized in that** the main axis (X11) of the main roller (11) is horizontal, **in that** the second anchor point (42) is arranged so as to be positioned at an altitude lower than the altitude of said main axis (X11), and **in that** the first anchor point (41) is situated vertically at an altitude strictly higher than the altitude of the second anchor point (42) and higher than the altitude of the main axis (X11), and horizontally in a position that is offset with respect to an imaginary vertical line passing through the second anchor point (42), in a direction perpendicular to the main axis (X11) of the main roller and directed towards the outside of the main roller (11) with respect to said main axis (X11), in such a way that the chain (21), suspended from the first anchor point (41) and held by the second anchor point (42), has a natural tendency to adopt a curved shape, under the effect of gravity, with a curvature that is of the same sign as the curvature of the main roller (11) .

13. Machine according to one of the preceding claims, **characterized in that** at least some, and preferably all, of the auxiliary rollers (22) of the chain (21) have axes of rotation (X22) that are mutually parallel and parallel to the receiving surface (11A), and preferably perpendicular to the longitudinal direction (L0).

14. Machine according to one of the preceding claims, **characterized in that** the axes of rotation (X22) of the auxiliary rollers (22) of the chain (21) coincide with the axes of pivoting (X24) of the articulations (24) of the links (23).

15. Machine according to Claim 13 or 14 and one of Claims 10 to 12, **characterized in that** the axes of rotation (X22) of the auxiliary rollers (22) of the chain (21) are parallel to the main axis (X11) of the main roller (11).
